(19) Europäisches Patentamt
European Patent Office
Office européen des brevets

(11) EP 4 708 437 A1

(12) EUROPEAN PATENT APPLICATION
published in accordance with Art. 153(4) EPC

(43) Date of publication:
**11.03.2026 Bulletin 2026/11**

(21) Application number: **24800047.3**

(22) Date of filing: **04.04.2024**

(51) International Patent Classification (IPC):
***H01M 10/0567*** *(2010.01)* ***H01M 4/505*** *(2010.01)*
***H01M 4/525*** *(2010.01)* ***H01M 10/052*** *(2010.01)*

(52) Cooperative Patent Classification (CPC):
Y02E 60/10

(86) International application number:
**PCT/JP2024/013922**

(87) International publication number:
**WO 2024/228316 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.05.2023 JP 2023075403**

(71) Applicant: **MU Ionic Solutions Corporation**
**Tokyo 100-8251 (JP)**

(72) Inventors:
- **TAMAI USAMI, Kaho**
  **Tokyo 100-8251 (JP)**
- **NAKAZAWA, Eiji**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **NONAQUEOUS ELECTROLYTIC SOLUTION AND NONAQUEOUS ELECTROLYTIC SOLUTION BATTERY INCLUDING NONAQUEOUS ELECTROLYTIC SOLUTION**

(57) The present invention relates to a nonaqueous electrolytic solution comprising an electrolyte, a nonaqueous solvent, a compound represented by general formula (I), and at least one specific anion-containing compound selected from an anion-containing compound having a P=O bond and a P-F bond, an anion-containing compound having an S=O bond and an S-F bond, and an alkyl sulfate anion-containing compound, in which the mass ratio of the compound represented by the general formula (I) to the specific anion-containing compound satisfies a specific range. The present invention also relates to a nonaqueous electrolytic solution battery comprising a negative electrode and a positive electrode capable of occluding and releasing metal ions, and the nonaqueous electrolytic solution.

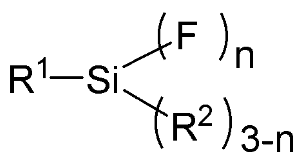

( I )

EP 4 708 437 A1

## Description

### Technical Field

The present invention relates to a nonaqueous electrolytic solution and a nonaqueous electrolytic solution battery comprising the nonaqueous electrolytic solution.

### Background Art

Nonaqueous electrolytic solution batteries such as a lithium-ion secondary battery have been put to practical use in a wide range of applications, including power sources for so-called small consumer devices such as a mobile phone, for example, a smartphone, and a laptop, and an on-board power source for electric vehicles. Therefore, numerous studies have been conducted in the field of positive and negative electrode active materials and additives for nonaqueous electrolytic solutions as measures for improving the battery characteristics of nonaqueous electrolytic solution batteries.

In recent years, the capacity of lithium-ion secondary batteries has been increased, and in addition to the introduction of high-capacity active materials with a large theoretical capacity per mass of electrode active material (for example, lithium transition metal composite oxides and Si-based active materials with a high Ni ratio in the transition metal), studies are being conducted to increase the energy density of batteries by increasing the charging voltage of the battery. In addition, the applications of lithium-ion batteries are diverse, and stable operation in higher temperature environments than before is required.

In nonaqueous electrolytic solutions, $LiPF_6$ is generally used as the electrolyte; however, it has been reported that $LiPF_6$ thermally decomposes at 68°C (Journal of Power Sources, 2006, Vol. 156, p.555-559). It has also been revealed that the decomposition products react with carbonate, which is a component of the electrolytic solution, and the decomposition reaction of carbonate proceeds (Journal of The Electrochemical Society, 2005, Vol.152, No.12, p.A2327-A2334).

Therefore, when the operating temperature of a lithium-ion secondary battery is 70°C or higher, in addition to the decomposition of the electrolytic solution on the electrodes, the decomposition of the electrolytic solution due to the thermal decomposition of $LiPF_6$ also occurs, resulting in significant deterioration compared to the case where the operating temperature of the battery is less than 70°C, and gas generation and an increase in internal resistance of the battery during operation at high temperatures become more pronounced.

PTL 1 discloses a nonaqueous electrolytic solution for secondary batteries that improves the discharge capacity retention rate and suppresses the internal resistance increase rate in a 60°C cycle test by including a difluorosilane compound having a cycloalkyl group in the electrolytic solution.

PTL 2 discloses a lithium-ion secondary battery that can suppress capacity reduction and gas generation in a 25°C cycle test by combining an electrolytic solution comprising a difluorosilane compound having a specific structure with a positive electrode made of a lithium transition metal composite oxide with a Ni content of 70% or more.

### Citation List

### Patent Literature

PTL 1: JP 2011-222450 A
PTL 2: US 2019/0305372

### Summary of Invention

### Technical Problem

However, in the secondary battery using the nonaqueous electrolytic solution for secondary batteries described in PTL 1 and the lithium ion secondary battery described in PTL 2, the suppression of the decrease in capacity retention rate, the increase in internal resistance, and the reduction in the gas generation amount were insufficient when the storage temperature was 70°C or higher.

An object of the present invention is to provide a nonaqueous electrolytic solution battery that can reduce the gas generation amount while suppressing a decrease in capacity retention rate and an increase in internal resistance when the nonaqueous electrolytic solution battery is operated at high temperatures.

Here, the "gas generation amount" refers to the amount of gas generated by decomposition of a solvent or

additives, which are components of the electrolytic solution on the electrodes.

Solution to Problem

As a result of intensive research to solve the above problems, the inventors have discovered that a nonaqueous electrolytic solution comprising a specific fluorosilane compound and a specific anion-containing compound can reduce the gas generation amount while suppressing a decrease in capacity retention and an increase in internal resistance when a nonaqueous electrolytic solution battery is operated at high temperatures in the case where the number of fluorine atoms bonded to silicon atoms in the specific fluorosilane compound, the content of the specific fluorosilane compound relative to the entire nonaqueous electrolytic solution, and the content of the specific anion-containing compound relative to the entire nonaqueous electrolytic solution satisfy a specific relationship and have completed the present invention.

That is, the present invention relates to the following [1] to [9].

[1] A nonaqueous electrolytic solution comprising an electrolyte, a nonaqueous solvent, a compound represented by general formula (I), and at least one specific anion-containing compound selected from an anion-containing compound having a P=O bond and a P-F bond, an anion-containing compound having an S=O bond and an S-F bond, and an alkyl sulfate anion-containing compound,

[Chem. 1]

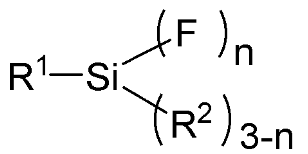

(I)

(In the formula (I), $R^1$ represents an alkyl group having 5 to 10 carbon atoms optionally substituted with a halogen atom, $R^2$ represents an alkyl group having 1 to 4 carbon atoms optionally substituted with a halogen atom, and n represents an integer of 1 to 3.)
in which the nonaqueous electrolytic solution satisfies the following mathematical formula (II).

$$0 < Z \leq 8/n^2 \qquad \text{(II)}$$

(In the formula (II), Z represents a mass ratio (= [A]/[B]) of a content [A] of the compound represented by the general formula (I) in the nonaqueous electrolytic solution to a content [B] of the specific anion-containing compound in the nonaqueous electrolytic solution, and n represents n of the compound represented by the general formula (I).)

[2] The nonaqueous electrolytic solution according to [1], in which in the general formula (I), $R^2$ is a methyl group.

[3] The nonaqueous electrolytic solution according to [1] or [2], in which in the general formula (I), n is 1 or 2.

[4] The nonaqueous electrolytic solution according to any one of [1] to [3], in which the specific anion-containing compound is an anion-containing compound having a P=O bond and a P-F bond.

[5] The nonaqueous electrolytic solution according to any one of [1] to [4], in which the content of the compound represented by the general formula (I) is 0.001 to 10% by mass with respect to the total amount of the nonaqueous electrolytic solution.

[6] The nonaqueous electrolytic solution according to any one of [1] to [5], in which the content of the specific anion-containing compound is 0.001 to 5% by mass with respect to the total amount of the nonaqueous electrolytic solution.

[7] A nonaqueous electrolytic solution battery having a positive electrode and a negative electrode, both of which are capable of absorbing and releasing a metal ion, and a nonaqueous electrolytic solution,
in which the nonaqueous electrolytic solution is the nonaqueous electrolytic solution according to any one of [1] to [6].

[8] The nonaqueous electrolytic solution battery according to [7], in which the positive electrode comprises a positive electrode active material, and the positive electrode active material is a lithium transition metal oxide represented by the following composition formula (1).

$$Li_{1+y}M^1O_2 \qquad (1)$$

(In the composition formula (1), y is -0.2 to 0.5, $M^1$ represents a plurality of elements including at least Ni element, and a molar ratio ($Ni/M^1$) of the content of Ni element to the content of all elements comprised in $M^1$ is 0.40 to 1.0.)

[9] The nonaqueous electrolytic solution battery according to [8], in which the positive electrode active material is a

lithium transition metal composite oxide represented by the following composition formula (2).

$$Li_{a1}Ni_{b1}M^2_{c1}O_2 \qquad (2)$$

(In the composition formula (2), a1, b1, and c1 are numerical values that satisfy $0.80 \leq a1 \leq 1.10$, $0.40 \leq b1 \leq 0.99$, and $0.01 \leq c1 \leq 0.60$, respectively, and $b1 + c1 = 1$. $M^2$ comprises at least one element selected from the group consisting of Co, Mn, Al, Mg, Zr, Fe, Ti, and Er.)

## Advantageous Effects of Invention

According to the present invention, it is possible to provide a nonaqueous electrolytic solution battery that can reduce the gas generation amount during operation at high temperatures while suppressing the decrease in capacity retention rate and the increase in internal resistance when the nonaqueous electrolytic solution battery is operated at high temperatures.

## Description of Embodiments

In the present specification, "$\alpha$ to $\beta$" or "$\alpha$-$\beta$" means a numerical range of $\alpha$ or more and $\beta$ or less.

The mechanism by which the nonaqueous electrolytic solution of the present invention can reduce the gas generation amount while suppressing the decrease in capacity retention rate and the increase in internal resistance when a nonaqueous electrolytic solution battery is operated at high temperatures is not clear, but is thought to be as follows.

The compound represented by the general formula (I) has a structure in which a fluorine atom is bonded to a silicon atom in the molecule. When a fluorine atom is bonded to a silicon atom, the electron density of the silicon atom decreases, and the reaction activity of the silicon atom of the compound represented by the general formula (I) increases. Since the specific anion-containing compound has an anion site, it reacts with the compound represented by the general formula (I) having a silicon atom with low electron density to form a composite surface film on the surface of the electrode active material. It is considered that the composite surface film suppresses the decomposition of the electrolytic solution on the electrode, thereby suppressing the decrease in capacity retention rate and the increase in internal resistance while reducing the gas generation amount when the nonaqueous electrolytic solution battery is operated at high temperatures. The composite surface film can also suitably suppress the reaction in which the decomposition product generated by the thermal decomposition of $LiPF_6$, which is generally used as an electrolyte, further decomposes on the electrode, and is considered to exhibit the effects of the present invention.

The electron density of the silicon atom in the compound represented by the general formula (I) is lowered approximately in proportion to the integer n. In addition, the steric hindrance around the silicon atom in the compound represented by the general formula (I) is reduced approximately in proportion to the integer n. Therefore, the reaction activity of the compound represented by the general formula (I) is increased approximately in proportion to $n^2$. Therefore, as represented by the mathematical formula (II), there is a suitable range for the ratio Z of the compound represented by the general formula (1) to the specific anion-containing compound, depending on n. When Z is in the range represented by the mathematical formula (II), it is believed that the thickness of the composite surface film can be suitably controlled, and the gas generation amount of the battery during operation at high temperatures can be significantly reduced.

Furthermore, the compound represented by the general formula (I) has an alkyl group ($R^1$) having 5 to 10 carbon atoms in the structure thereof. Due to the appropriate steric hindrance, the density of the composite surface film formed is suitably controlled, which helps to suppress an increase in the internal resistance of the battery.

Examples of the nonaqueous electrolytic solution battery of the present invention include a polyvalent cation battery, a metal-air secondary battery, and a secondary battery using an s-block metal other than those mentioned above, and a nonaqueous electrolyte secondary battery is preferred, and a lithium ion secondary battery is more preferred.

### <1. Nonaqueous Electrolytic Solution>

The nonaqueous electrolytic solution according to the present invention comprises an electrolyte, a nonaqueous solvent, a fluorosilane compound represented by general formula (I), and a specific anion-containing compound, and the mass ratio of the compound represented by the general formula (I) to the specific anion-containing compound satisfies a specific range. Each component will be described below.

### [1-1. Compound Represented by General Formula (I)]

[Chem. 2]

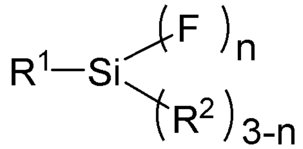

(I)

In the general formula (I), $R^1$ represents an alkyl group having 5 to 10 carbon atoms optionally substituted with a halogen atom, $R^2$ represents an alkyl group having 1 to 4 carbon atoms optionally substituted with a halogen atom, and n represents an integer of 1 to 3.

Examples of the alkyl group having 5 to 10 carbon atoms represented by $R^1$ include straight-chain or branched linear alkyl groups, cycloalkyl groups having a cyclic structure, and halogenated alkyl groups in which at least one hydrogen atom of the alkyl group is substituted with a halogen atom.

Examples of the linear alkyl group having 5 to 10 carbon atoms, which is $R^1$, include an n-pentyl group, a methylbutyl group, an n-hexyl group, a methylpentyl group, an n-heptyl group, a methylhexyl group, an n-octyl group, a methylheptyl group, an n-nonyl group, a methyloctyl group, an n-decyl group, and a methylnonyl group. Among these, a linear alkyl group having 5 to 10 carbon atoms, such as an n-pentyl group, an n-hexyl group, an n-heptyl group, an n-octyl group, an n-nonyl group, and an n-decyl group, is preferred, and a linear alkyl group having 5 to 8 carbon atoms, such as an n-pentyl group, an n-hexyl group, an n-heptyl group, and an n-octyl group, is even more preferred. The linear alkyl groups described above are preferred because they suppress side reactions of the compound represented by the general formula (I) on the surface of the electrode active material.

Examples of the cycloalkyl group having 5 to 10 carbon atoms, which is $R^1$, include a cyclopentyl group, a cyclohexyl group, a cycloheptyl group, a cyclooctyl group, a cyclononyl group, a cyclodecyl group, a cyclohexylmethyl group, a cyclohexylethyl group, a methylcyclohexyl group, a dimethylcyclohexyl group, an ethylcyclohexyl group, and a methylcyclohexylmethyl group. Among these, a cyclopentyl group, a cyclohexyl group, a cycloheptyl group, and a cyclooctyl group are preferred, and a cyclopentyl group and a cyclohexyl group are even more preferred. The cycloalkyl groups described above are preferred because they suppress side reactions of the compound represented by the general formula (I) on the surface of the electrode active material.

Examples of the halogen atom of the halogenated alkyl group having 5 to 10 carbon atoms, which is $R^1$, include a fluorine atom, a chlorine atom, a bromine atom, and an iodine atom, with a fluorine atom and a chlorine atom being preferred, and a fluorine atom being more preferred.

Examples of the halogenated alkyl group having 5 to 10 carbon atoms include a 5-fluoropentyl group, a 6-fluorohexyl group, a 5,5-difluoropentyl group, and a 5,5,5-trifluoropentyl group.

The number of carbon atoms in $R^1$ is preferably 6 to 9, and more preferably 6 to 8. The alkyl groups described above provide an appropriate steric hindrance to the compound represented by the general formula (I), which allows the density of the composite surface film formed to be appropriately controlled, thereby contributing to suppressing an increase in the internal resistance of the battery.

Examples of the alkyl group having 1 to 4 carbon atoms represented by $R^2$ include straight-chain or branched linear alkyl groups, cycloalkyl groups having a cyclic structure, and halogenated alkyl groups in which at least one hydrogen atom of the alkyl group is substituted with a halogen atom.

Examples of the linear alkyl group having 1 to 4 carbon atoms, which is $R^2$, include a methyl group, an ethyl group, an n-propyl group, a methylethyl group, an n-butyl group, a 1-methylpropyl group, a 2-methylpropyl group, and a dimethylethyl (tert-butyl) group. Among these, a linear alkyl group having 1 to 4 carbon atoms is preferred, a methyl group and an ethyl group are more preferred, and a methyl group is particularly preferred.

Examples of the cycloalkyl group, which is $R^2$, include a cyclopropyl group and a cyclobutyl group.

Examples of the halogen atom of the halogenated alkyl group having 1 to 4 carbon atoms, which is $R^2$, include a fluorine atom, a chlorine atom, a bromine atom, and an iodine atom, with a fluorine atom and a chlorine atom being preferred, and a fluorine atom being more preferred.

Examples of the halogenated alkyl group having 1 to 4 carbon atoms include a trifluoromethyl group, a 2,2,2-trifluoroethyl group, a 3-fluoropropyl group, a 3,3-difluoropropyl group, a 3,3,3-trifluoropropyl group, a heptafluoropropyl group, a 3-chloropropyl group, and a 2-chloro-3,3,3-trifluoropropyl group.

Among the above-mentioned $R^2$, a linear alkyl group having 1 to 4 carbon atoms is preferable, a straight-chain linear alkyl group having 1 to 4 carbon atoms is more preferable, a methyl group and an ethyl group are even more preferable, and a methyl group is most preferable. With these alkyl groups, the steric hindrance around the silicon atom, which is the reactive site of the compound represented by the general formula (I), is reduced, and the reaction with the specific anion-containing compound proceeds favorably, making it easier to form a composite surface film on the surface of the electrode active material.

n indicates the number of fluorine atoms bonded to the silicon atom in the compound represented by the general

formula (I) and represents an integer of 1 to 3. That is, when n is 1, Si in the general formula (I) has one Si-$R^1$ bond, one Si-F bond, and two Si-$R^2$ bonds. When n is 2, Si in the general formula (I) has one Si-$R^1$ bond, two Si-F bonds, and one Si-$R^2$ bond. When n is 3, Si in the general formula (I) has one Si-$R^1$ bond, three Si-F bonds, and no Si-$R^2$ bond.

It is preferable that n is 1 or 2. Within this range, the compound represented by the general formula (I) and the specific anion-containing compound can react favorably to form a composite surface film. In particular, when n is 2, the suppression of gas generation during operation at high temperatures is excellent, and when n is 1, the balance between the capacity retention rate and the suppression of gas generation during operation at high temperatures is excellent.

Examples of the compound represented by the general formula (I) are shown in formulas (F1-1) to (F1-28), (F2-1) to (F2-28), and (F3-1) to (F3-28).

The compound represented by the general formula (I) is not particularly limited to the following examples.

[Chem. 3]

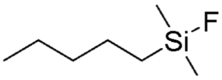
(F1-1)

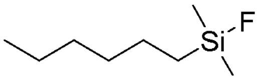
(F1-2)

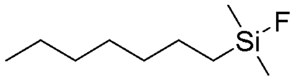
(F1-3)

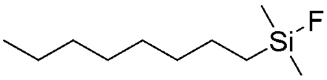
(F1-4)

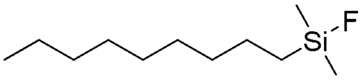
(F1-5)

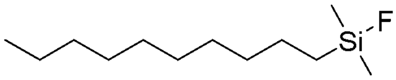
(F1-6)

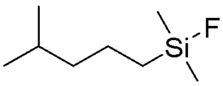
(F1-7)

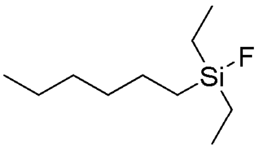
(F1-8)

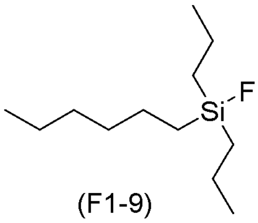
(F1-9)

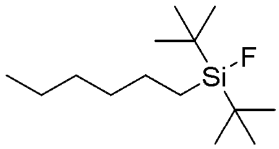
(F1-10)

[Chem. 4]

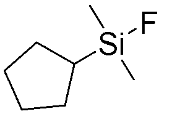
(F1-11)

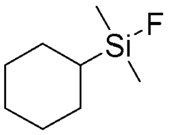
(F1-12)

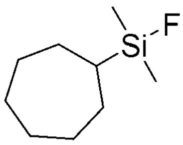
(F1-13)

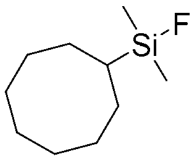
(F1-14)

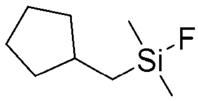
(F1-15)

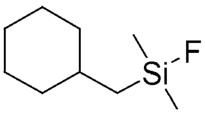
(F1-16)

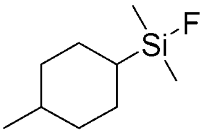
(F1-17)

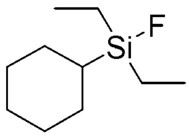
(F1-18)

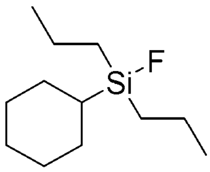
(F1-19)

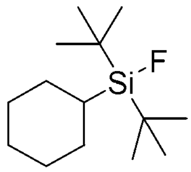
(F1-20)

[Chem. 5]

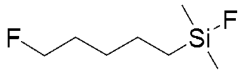
(F1-21)

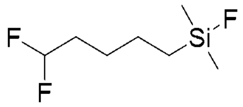
(F1-22)

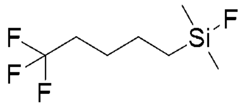
(F1-23)

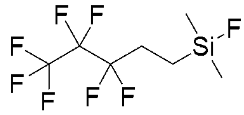
(F1-24)

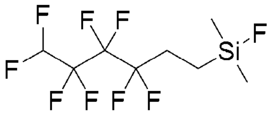
(F1-25)

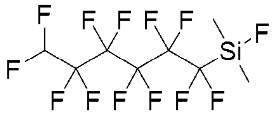
(F1-26)

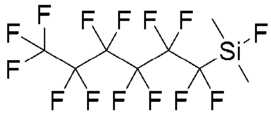
(F1-27)

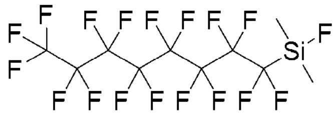
(F1-28)

[Chem. 6]

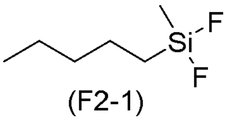
(F2-1)

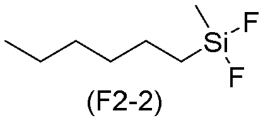
(F2-2)

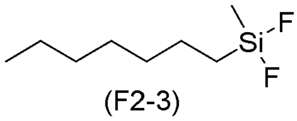
(F2-3)

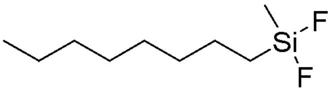
(F2-4)

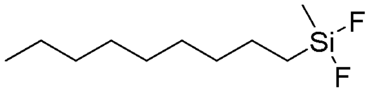
(F2-5)

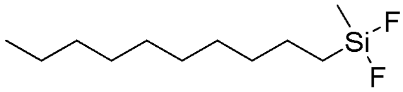
(F2-6)

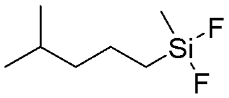
(F2-7)

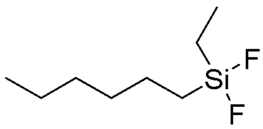
(F2-8)

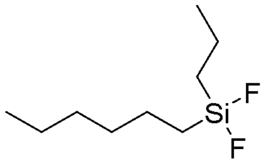
(F2-9)

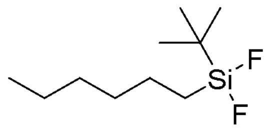
(F2-10)

[Chem. 7]

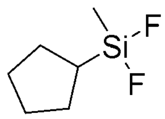
(F2-11)

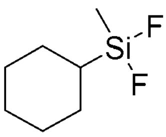
(F2-12)

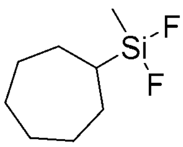
(F2-13)

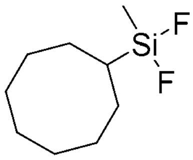
(F2-14)

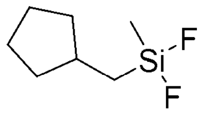
(F2-15)

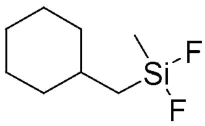
(F2-16)

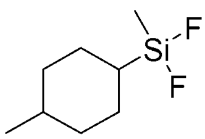
(F2-17)

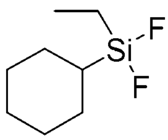
(F2-18)

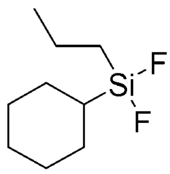
(F2-19)

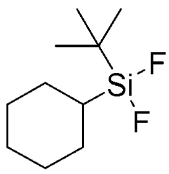
(F2-20)

[Chem. 8]

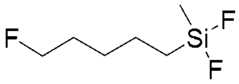
(F2-21)

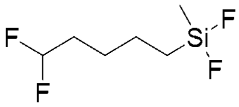
(F2-22)

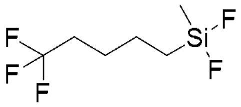
(F2-23)

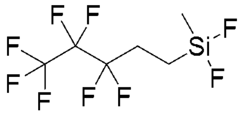
(F2-24)

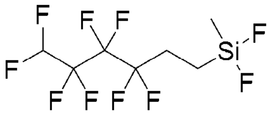
(F2-25)

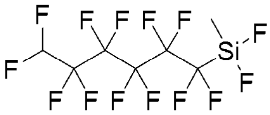
(F2-26)

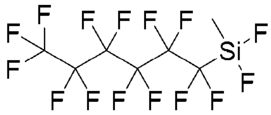
(F2-27)

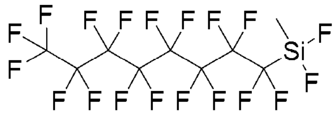
(F2-28)

[Chem. 9]

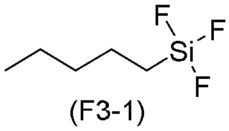
(F3-1)

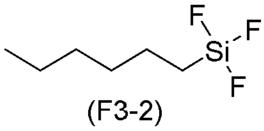
(F3-2)

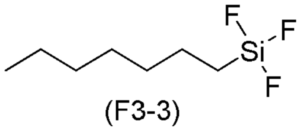
(F3-3)

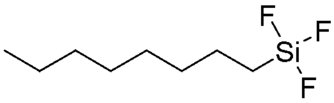
(F3-4)

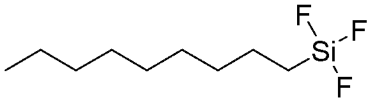
(F3-5)

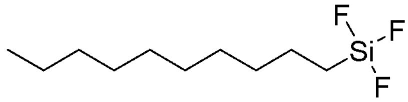
(F3-6)

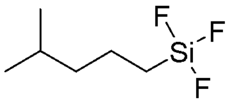
(F3-7)

[Chem. 10]

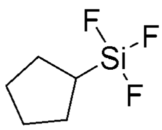
(F3-11)

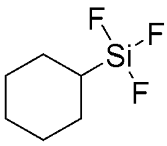
(F3-12)

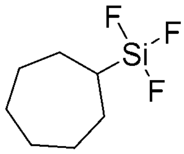
(F3-13)

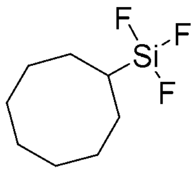
(F3-14)

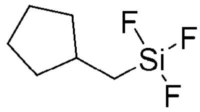
(F3-15)

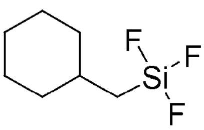
(F3-16)

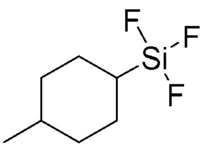
(F3-17)

[Chem. 11]

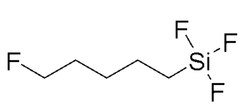
(F3-21)
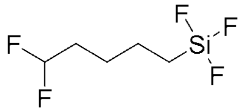
(F3-22)
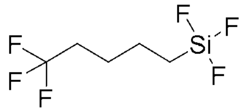
(F3-23)
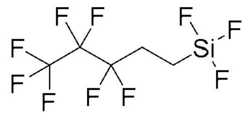
(F3-24)

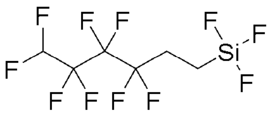
(F3-25)
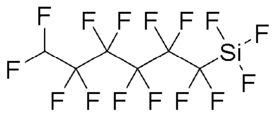
(F3-26)
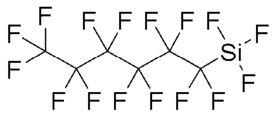
(F3-27)
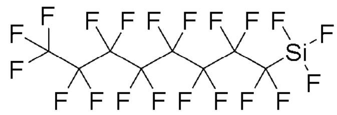
(F3-28)

Among the above compounds, from the viewpoint of optimizing the reaction activity of the compound represented by the general formula (I) and reacting with the specific anion-containing compound to form a suitable composite surface film, a compound selected from the group of compounds represented by formulas (F1-1) to (F1-28) and (F2-1) to (F2-28) in which n is 1 or 2 is preferred, and a compound selected from the group of compounds represented by formulas (F1-1) to (F1-7), (F1-11) to (F1-17), (F2-1) to (F2-7), and (F2-11) to (F2-17) in which $R^1$ is an unsubstituted linear alkyl group having 5 to 10 carbon atoms or a cycloalkyl group having 5 to 10 carbon atoms, $R^2$ is a methyl group, and n is 1 or 2 is more preferred.

The content of the compound represented by the general formula (I) is, with respect to the total amount of the nonaqueous electrolytic solution, usually 0.001% by mass or more, preferably 0.01% by mass or more, more preferably 0.1% by mass or more, and even more preferably 0.2% by mass or more, and is usually 10% by mass or less, preferably 8.0% by mass or less, and even more preferably 5.0% by mass or less. Moreover, the content of the compound represented by the general formula (I) is usually 0.001 to 10% by mass, preferably 0.01 to 8.0% by mass, more preferably 0.1 to 5.0% by mass, and even more preferably 0.2 to 5.0% by mass, with respect to the total amount of the nonaqueous electrolytic solution.

When n is 1, the content of the compound represented by the general formula (I) is preferably in the range of 0.01 to 10.0% by mass, and particularly preferably 0.5 to 8.0% by mass, with respect to the total amount of the nonaqueous electrolytic solution. When n is 2, the content of the compound represented by the general formula (I) is preferably 0.01 to 5.0% by mass, and particularly preferably in the range of 0.1 to 2.0% by mass, with respect to the total amount of the nonaqueous electrolytic solution. When n is 3, the content of the compound represented by the general formula (I) is preferably 0.1 to 3.0% by mass, and particularly preferably 0.1 to 1.0% by mass, with respect to the total amount of the nonaqueous electrolytic solution.

When the content of the compound represented by the general formula (I) relative to the total amount of the nonaqueous electrolytic solution is within the above range, the concentration of the compound represented by the general formula (I) on the surface of the electrode active material proceeds favorably, and a composite surface film is more easily formed on the surface of the electrode active material, making it possible to produce a battery that has an excellent balance between suppressing the gas generation amount and suppressing the internal resistance during operation at high temperatures.

The compound represented by the general formula (I) can be produced by a known method.

For example, various fluorosilane compounds can be synthesized by fluorinating a chlorosilane compound or an alkoxysilane compound with a metal fluoride, boron trifluoride or a boron trifluoride complex, anhydrous hydrogen fluoride, hydrofluoric acid, or the like.

[1-2. Specific Anion-containing Compound]

The specific anion-containing compound is at least one selected from an anion-containing compound having a P=O bond and a P-F bond, an anion-containing compound having an S=O bond and an S-F bond, and an alkyl sulfate anion-containing compound.

The specific anion-containing compound is usually an acid or a salt. The specific anion-containing compound is preferably a salt, and the counter cation is preferably an alkali metal cation, such as lithium, sodium, and potassium, and more preferably a lithium cation.

The at least one anion-containing compound selected from an anion-containing compound having a P=O bond and a P-F bond, an anion-containing compound having an S=O bond and an S-F bond, and an alkyl sulfate anion-containing compound may be used alone or in combination of two or more in an arbitrary ratio. Among these, an anion-containing compound having a P=O bond and a P-F bond is preferred from the viewpoint of suppressing an increase in the

gas generation amount during operation at high temperatures.

[1-2-1. Anion-containing Compound Having P=O bond and P-F Bond]

Examples of the anion-containing compound having a P=O bond and a P-F bond include a compound comprising a monofluorophosphate anion, such as $PO_3F^{2-}$, and a difluorophosphate anion, such as $PO_2F_2^-$. Among these, a compound comprising a difluorophosphate anion is preferred from the viewpoint of a balance between the output characteristics of the battery and the protection of the electrode interface.

[1-2-2. Anion-containing Compound Having S=O Bond and S-F Bond]

Examples of the anion-containing compound having an S=O bond and an S-F bond include a compound comprising a fluorosulfonate anion, such as $FSO_3^-$; a fluorosulfonylimide anion, such as $(FSO_2)_2N^-$ and $(FSO_2)(CF_3SO_2)N^-$; and a compound comprising a fluorosulfonylmethide anion, such as $(FSO_2)_3C^-$. However, in the present invention, the anion-containing compound having an S=O bond and an S-F bond does not include an alkyl sulfate anion-containing compound.

Among these, a compound comprising a fluorosulfonate anion or a fluorosulfonylimide anion is preferred, and a compound comprising a fluorosulfonate anion is more preferred, from the viewpoint of the balance between the output characteristics of the battery and the protection of the electrode interface.

[1-2-3. Alkylsulfate Anion-containing Compound]

Examples of the alkyl sulfate anion-containing compound include a compound comprising an alkylsulfate anion having 1 to 4 carbon atoms, such as $CH_3SO_4^-$ and $CH_3CH_2SO_4^-$.

(Content of Specific Anion-containing Compound)

In a case where the nonaqueous electrolytic solution comprises the specific anion-containing compound, the content of the specific anion-containing compound (the total amount in the case of two or more kinds) in the total amount of the nonaqueous electrolytic solution is preferably 0.001% by mass or more, more preferably 0.01% by mass or more, even more preferably 0.02% by mass or more, still more preferably 0.03% by mass or more, especially preferably 0.04% by mass or more, particularly preferably 0.05% by mass or more, and most preferably 0.1% by mass or more, and is preferably 5% by mass or less, more preferably 4% by mass or less, and even more preferably 3% by mass or less. In addition, in the case where the nonaqueous electrolytic solution comprises the specific anion-containing compound, the content of the specific anion-containing compound (the total amount in the case of two or more kinds) in the total amount of the nonaqueous electrolytic solution is preferably 0.001 to 5% by mass, more preferably 0.01 to 4% by mass, even more preferably 0.02 to 3% by mass, especially preferably 0.04 to 3% by mass, particularly preferably 0.05 to 3% by mass, and most preferably 0.1 to 3% by mass.

When the content of the specific anion-containing compound is within the above range, it is possible to improve the battery characteristics, particularly the direct current resistance (DCR) retention rate during operation at high temperatures, and suppress an increase in the gas generation amount during operation at high temperatures. The reason for this is not clear, but it is thought that when the content of the specific anion-containing compound is within the above mass ratio range, a side reaction of a component of the nonaqueous electrolytic solution on the electrode can be suppressed to a minimum.

Identification of the specific anion-containing compound and measurement of the content thereof are performed by nuclear magnetic resonance (NMR) spectroscopy.

(Mass ratio of electrolyte to specific anion-containing compound)

The mass ratio of the content of the specific anion-containing compound (the total amount in the case of two or more kinds) to the content of the electrolyte (specific anion-containing compound [g]/electrolyte [g]) in the nonaqueous electrolytic solution is usually 0.00005 or more, preferably 0.001 or more, more preferably 0.01 or more, even more preferably 0.02 or more, and still more preferably 0.025 or more, and is usually 0.5 or less, preferably 0.45 or less, more preferably 0.4 or less, and even more preferably 0.35 or less. The above mass ratio (specific anion-containing compound [g]/electrolyte [g]) is usually 0.00005 to 0.5, preferably 0.001 to 0.45, more preferably 0.01 to 0.4, even more preferably 0.02 to 0.35, and still more preferably 0.025 to 0.35.

When the mass ratio is within the above range, it is possible to improve the battery characteristics, in particular, the DCR retention rate during operation at high temperatures and suppress the increase in the gas generation amount

during operation at high temperatures. The reason for this is not clear, but it is thought that by comprising the specific anion-containing compound and the electrolyte within the above mass ratio range, a side reaction of the electrolyte in the battery system can be suppressed to a minimum.

[1-3. Relationship Between the Compound Represented by General Formula (I) and the Specific Anion-Containing Compound]

The compound represented by the general formula (I) and the specific anion-containing compound in the nonaqueous electrolytic solution of the present invention satisfy the following mathematical formula (II).

$$0 < Z \leq 8/n^2 \qquad \text{(II)}$$

In the formula (II), Z represents a mass ratio (= [A]/[B]) of a content [A] of the compound represented by the general formula (I) in the nonaqueous electrolytic solution to a content [B] of the specific anion-containing compound in the nonaqueous electrolytic solution, and n represents n in the compound represented by the general formula (I). When the nonaqueous electrolytic solution comprises a plurality of compounds represented by the general formula (I), the content of the compound represented by the general formula (I) that is the most abundant is defined as [A]. When the nonaqueous electrolytic solution comprises a plurality of specific anion-containing compounds, the total amount of all the specific anion-containing compounds is defined as [B].

Z is a value of $8/n^2$ or less, preferably $7/n^2$ or less, more preferably $6/n^2$ or less, even more preferably $5/n^2$ or less, and particularly preferably $4.5/n^2$ or less. Within this range, the thickness of the composite surface film made of the compound represented by the general formula (I) and the specific anion-containing compound can be suitably controlled, and when the nonaqueous electrolytic solution battery is operated at high temperatures, it is possible to suppress the decrease in capacity retention rate and the increase in internal resistance and reduce the gas generation amount.

Z is a value greater than 0 (i.e., $0/n^2$), and is preferably $0.01/n^2$ or greater, more preferably $0.05/n^2$ or greater, more preferably $0.1/n^2$ or greater, more preferably $0.6/n^2$ or greater, more preferably $0.8/n^2$ or greater, even more preferably $1.0/n^2$ or greater, still more preferably $1.2/n^2$ or greater, and particularly preferably $1.5/n^2$ or greater. Within this range, the compound represented by the general formula (I) and the specific anion-containing compound can react to form a suitable composite surface film on the surface of the electrode active material.

In addition, Z is a value greater than 0 and $8/n^2$ or less, and is preferably $0.01/n^2$ to $7/n^2$, more preferably $0.05/n^2$ to $6/n^2$, more preferably $0.1/n^2$ to $6/n^2$, more preferably $0.6/n^2$ to $6/n^2$, more preferably $0.8/n^2$ to $6/n^2$, even more preferably $1.0/n^2$ to $5/n^2$, still more preferably $1.2/n^2$ to $5/n^2$, and particularly preferably $1.5/n^2$ to $4.5/n^2$.

[1-4. Electrolyte]

Preferred examples of the electrolyte of the nonaqueous electrolytic solution include alkali metal salts, such as lithium salts, sodium salts, and potassium salts. When the nonaqueous electrolytic solution of the present invention is used in a lithium ion battery, the counter cation in the electrolyte is preferably a lithium cation. When the nonaqueous electrolytic solution of the present invention is used in a sodium ion battery, the counter cation in the electrolyte is preferably a sodium ion. When the nonaqueous electrolytic solution of the present invention is used in a potassium ion battery, the counter cation in the electrolyte is preferably a potassium ion.

The lithium salt is not particularly limited, and examples thereof include lithium fluoroborate salts, lithium fluorophosphate salts, lithium tungstate salts, lithium carboxylate salts, lithium sulfonate salts, lithium imide salts, lithium methide salts, lithium oxalate salts, and fluorine-containing organic lithium salts, excluding an anion-containing compound having a P=O bond and a P-F bond, an anion-containing compound having an S=O bond and an S-F bond, and an alkyl sulfate anion-containing compound.

Among these, from the viewpoint of improving low-temperature output properties, high-rate charging and discharging properties, impedance properties, high-temperature storage properties, cycle properties, and the like, preferred are lithium fluoroborate salts, such as $LiBF_4$; lithium fluorophosphate salts, such as $LiPF_6$; lithium sulfonate salts, such as $CH_3SO_3Li$; lithium imide salts, such as $LiN(CF_3SO_2)_2$, $LiN(C_2F_5SO_2)_2$, lithium cyclic 1,2-perfluoroethanedisulfonylimide, and lithium cyclic 1,3-perfluoropropanedisulfonylimide; lithium methide salts, such as $LiC(CF_3SO_2)_3$ and $LiC(C_2F_5SO_2)_3$; and lithium oxalate salts, such as lithium difluorooxalatoborate, lithium bis(oxalate)borate, lithium tetrafluorooxalatophosphate, lithium difluorobis(oxalate)phosphate, and lithium tris(oxalate)phosphate, more preferred are one or more selected from $LiPF_6$ and lithium bis(oxalate)borate, and particularly preferred is $LiPF_6$.

The above-mentioned electrolyte may be used alone or in combination of two or more thereof in an arbitrary ratio.

The combination of two or more kinds of electrolytes is not particularly limited, and examples thereof include a combination of $LiPF_6$ and $LiBF_4$, and a combination of $LiPF_6$ and $LiN(CF_3SO_2)_2$. Among these, a combination of $LiPF_6$ and

$LiBF_4$ is preferred. When two or more electrolytes are used and $LiPF_6$ is used, it is preferable that the content of $LiPF_6$ is the highest among the two or more electrolytes.

The sodium salt is not particularly limited, and examples thereof include sodium fluoroborate salts, sodium fluorophosphate salts, sodium tungstate salts, sodium carboxylate salts, sodium sulfonate salts, sodium imide salts, sodium methide salts, sodium oxalate salts, and fluorine-containing organic sodium salts, excluding an anion-containing compound having a P=O bond and a P-F bond, an anion-containing compound having an S=O bond and an S-F bond, and an alkyl sulfate anion-containing compound.

Among these, from the viewpoint of improving low-temperature output properties, high-rate charging and discharging properties, impedance properties, high-temperature storage properties, cycle properties, and the like, preferred are sodium fluoroborate salts, such as $NaBF_4$; sodium fluorophosphate salts, such as $NaPF_6$; sodium sulfonate salts, such as $CH_3SO_3Na$; sodium imide salts, such as $NaN(CF_3SO_2)_2$, $NaN(C_2F_5SO_2)_2$, sodium cyclic 1,2-perfluoroethane disulfonylimide, and sodium cyclic 1,3-perfluoropropane disulfonylimide; sodium methide salts, such as $NaC(CF_3SO_2)_3$ and $NaC(C_2F_5SO_2)_3$; and sodium oxalate salts, such as sodium difluorooxalatoborate, sodium bis(oxalato)borate, sodium tetrafluorooxalatophosphate, sodium difluorobis(oxalato)phosphate, and sodium tris(oxalato)phosphate, more preferred are one or more selected from $NaPF_6$ and sodium bis(oxalato)borate, and particularly preferred is $NaPF_6$.

The above other compounds that become electrolytes can be used alone or in combination of two or more thereof in an arbitrary ratio.

The combination of two or more kinds of other compounds that become electrolytes is not particularly limited, and examples thereof include a combination of $NaPF_6$ and $NaBF_4$, and a combination of $NaPF_6$ and $NaN(CF_3SO_2)_2$.

Among these, the combination of $NaPF_6$ and $NaBF_4$ is preferred.

Examples of potassium salts include those in which Li and Na in the lithium salts and sodium salts are replaced with potassium (K).

The total concentration of the electrolytes is not particularly limited, is usually 8% by mass or more, preferably 8.5% by mass or more, and more preferably 9% by mass or more, and is usually 18% by mass or less, preferably 17% by mass or less, and more preferably 16% by mass or less, with respect to the total amount of the nonaqueous electrolytic solution, from the viewpoint that the electrical conductivity makes the battery operation appropriate and sufficient output properties are exhibited. In addition, the total concentration of the electrolytes is usually 8 to 18% by mass, preferably 8.5 to 17% by mass, and more preferably 9 to 16% by mass, with respect to the total amount of the nonaqueous electrolytic solution. However, when an electrolyte compound corresponding to [1-2. Specific Anion-containing Compound] and [1-6. Auxiliary Agent] is comprised in the nonaqueous electrolytic solution, an electrolyte other than the lithium salt corresponding to the specific anion-containing compound and the auxiliary agent is necessarily comprised. In addition, when the content of the electrolyte compound is 5.0% by mass or less, it is classified as an "auxiliary agent" in the present specification. Therefore, even if the "specific anion-containing compound" and the "compound corresponding to the auxiliary agent" correspond to the "electrolyte" as components of the nonaqueous electrolytic solution of the present embodiment, the amount of the "electrolyte" does not include the amount of the "specific anion-containing compound" and the "compound corresponding to the auxiliary agent".

Identification of the electrolyte and measurement of the content thereof are performed by nuclear magnetic resonance (NMR) spectroscopy.

[1-5. Nonaqueous Solvent]

Similar to a general nonaqueous electrolytic solution, the nonaqueous electrolytic solution of the present invention usually comprises a nonaqueous solvent that dissolves the electrolyte as its main component. The nonaqueous solvent is not particularly limited, and known organic solvents can be used.

Examples of the organic solvent include a saturated cyclic carbonate, such as ethylene carbonate, propylene carbonate, and butylene carbonate; a linear carbonate, such as dimethyl carbonate, diethyl carbonate, and ethyl methyl carbonate; a linear carboxylic acid ester, such as methyl acetate, ethyl acetate, propyl acetate, and butyl acetate; a cyclic carboxylic acid ester, such as γ-butyrolactone and γ-valerolactone; an ether compound, such as dimethoxymethane, diethoxymethane, ethoxymethoxymethane, tetrahydrofuran, 1,3-dioxane, and 1,4-dioxane; and a sulfone compound, such as 2-methylsulfolane, 3-methylsulfolane, 2-fluorosulfolane, 3-fluorosulfolane, dimethylsulfone, ethylmethylsulfone, and monofluoromethylmethylsulfone.

In the present embodiment, the nonaqueous solvent is preferably at least one selected from the group consisting of saturated cyclic carbonates, linear carbonates, a linear carboxylate ester, a cyclic carboxylate ester, an ether compound, and a sulfone compound.

Among these, a saturated cyclic carbonate, a linear carbonate, and a carboxylate ester are preferred, and a saturated cyclic carbonate and a linear carbonate are more preferred.

These non-aqueous solvents may be used alone or in combination of two or more thereof.

The combination of two or more kinds of nonaqueous solvents is not particularly limited, and examples thereof include a combination of saturated cyclic carbonates and a linear carboxylate ester, a combination of a cyclic carboxylate ester and linear carbonates, and a combination of saturated cyclic carbonates, linear carbonates, and a linear carboxylate ester. Among these, a combination of saturated cyclic carbonates and linear carbonates and a combination of saturated cyclic carbonates, linear carbonates, and a linear carboxylate ester are preferred.

[1-5-1. Saturated Cyclic Carbonate]

Examples of the saturated cyclic carbonate, which is one aspect of the nonaqueous solvent in the present embodiment, typically include those having an alkylene group having 2 to 4 carbon atoms, and a saturated cyclic carbonate having 2 to 3 carbon atoms is preferably used from the viewpoint of improving battery characteristics resulting from an improvement in the degree of dissociation of lithium ions.
Examples of the saturated cyclic carbonate include ethylene carbonate, propylene carbonate, and butylene carbonate. Among these, ethylene carbonate and propylene carbonate are preferred, and ethylene carbonate, which is less likely to be oxidized and reduced, is more preferred. The saturated cyclic carbonate may be used alone or in any combination of two or more thereof in an arbitrary ratio.
The content of the saturated cyclic carbonate is not particularly limited, and is arbitrary as long as the effects of the present invention are not significantly impaired. However, the content of the saturated cyclic carbonate is usually 3 to 90% by volume, preferably 3 to 85% by volume, and more preferably 5 to 80% by volume, with respect to the total amount of the nonaqueous solvent in the nonaqueous electrolytic solution. Here, the content is usually 3% by volume or more, preferably 5% by volume or more, and on the other hand, is usually 90% by volume or less, preferably 85% by volume or less, and more preferably 80% by volume or less. By setting the content within this range, a decrease in electrical conductivity caused by a decrease in the dielectric constant of the nonaqueous electrolytic solution is avoided, and the large current discharging properties, the stability with respect to the negative electrode, and the cycle properties of the nonaqueous electrolytic solution secondary battery are easily set to be in a favorable range, the oxidation and reduction resistance of the nonaqueous electrolytic solution is improved, and the stability during high-temperature storage tends to be improved.
In the present embodiment, % by volume means the volume at 25°C and 1 atmospheric pressure.

[1-5-2. Linear Carbonate]

For the linear carbonate, which is one aspect of the nonaqueous solvent in the present embodiment, a linear carbonate having 3 to 7 carbon atoms is usually used, and in order to adjust the viscosity of the electrolytic solution to an appropriate range, a linear carbonate having 3 to 5 carbon atoms is preferably used.
Specific examples of the linear carbonate include dimethyl carbonate, diethyl carbonate, di-n-propyl carbonate, diisopropyl carbonate, n-propyl isopropyl carbonate, ethyl methyl carbonate, and methyl-n-propyl carbonate. Dimethyl carbonate, diethyl carbonate, and ethyl methyl carbonate are particularly preferable.
Linear carbonates having a fluorine atom (hereinafter sometimes abbreviated as "fluorinated linear carbonate") can also be suitably used. The number of fluorine atoms comprised in the fluorinated linear carbonate is not particularly limited as long as it is 1 or more, but is usually 6 or less, and is preferably 4 or less. When the fluorinated linear carbonate has a plurality of fluorine atoms, the plurality of fluorine atoms may be bonded to the same carbon or may be bonded to different carbons.
Examples of the fluorinated linear carbonate include a fluorinated dimethyl carbonate derivative such as fluoromethyl methyl carbonate, a fluorinated ethyl methyl carbonate derivative such as 2-fluoroethyl methyl carbonate, and a fluorinated diethyl carbonate derivative such as ethyl-(2-fluoroethyl) carbonate.
The linear carbonate may be used alone or in any combination of two or more thereof in an arbitrary ratio.
The content of the linear carbonate is not particularly limited, and is usually 15 to 90% by volume, preferably 20 to 85% by volume, and more preferably 25 to 80% by volume, with respect to the total amount of the nonaqueous solvent in the nonaqueous electrolytic solution. Here, the content is usually 15% by volume or more, preferably 20% by volume or more, and more preferably 25% by volume or more, and is usually 90% by volume or less, preferably 85% by volume or less, and more preferably 80% by volume or less. By setting the content of the linear carbonate within the above range, the viscosity of the nonaqueous electrolytic solution can be set to an appropriate range, the decrease in ion conductivity can be suppressed, and the output properties of the nonaqueous electrolytic solution secondary battery can be easily set to a favorable range.
Furthermore, by combining a specific linear carbonate with ethylene carbonate at a specific content, battery performance can be significantly improved.
For example, when ethyl methyl carbonate is selected as the specific linear carbonate, the content of ethylene carbonate is not particularly limited and is arbitrary as long as the effects of the present invention are not significantly impaired. However, the above content of ethylene carbonate is usually 15 to 45% by volume, and preferably 20 to 40% by

volume, with respect to the total amount of the nonaqueous solvent in the nonaqueous electrolytic solution. Here, the above content is usually 15% by volume or more, and preferably 20% by volume or more, and is usually 45% by volume or less, and preferably 40% by volume or less.

In addition, the content of ethyl methyl carbonate is usually 55 to 85% by volume, and preferably 60 to 80% by volume, with respect to the total amount of the nonaqueous solvent in the nonaqueous electrolytic solution. Here, the above content is usually 55% by volume or more, and preferably 60% by volume or more, and is usually 85% by volume or less, and preferably 80% by volume or less.

By setting each content within the above range, high-temperature stability is excellent and gas generation tends to be suppressed.

[1-5-3. Linear Carboxylate]

Examples of the linear carboxylate, which is one aspect of the nonaqueous solvent in the present embodiment, include methyl acetate, ethyl acetate, propyl acetate, butyl acetate, methyl propionate, ethyl propionate, propyl propionate, methyl butyrate, ethyl butyrate, methyl valerate, methyl isobutyrate, ethyl isobutyrate, and methyl pivalate. Among these, methyl acetate, ethyl acetate, propyl acetate, and butyl acetate are preferable from the viewpoint of improving battery characteristics. In addition, linear carboxylates obtained by substituting a part of hydrogen of the above linear carboxylates with fluorine can also be suitably used. Examples of such fluorine-substituted linear carboxylates include methyl trifluoroacetate and ethyl trifluoroacetate.

[1-5-4. Cyclic Carboxylate]

Examples of the cyclic carboxylate, which is one aspect of the nonaqueous solvent in the present embodiment, include γ-butyrolactone and γ-valerolactone. Among these, γ-butyrolactone is more preferable. Cyclic carboxylates obtained by substituting a part of hydrogen of each of the above cyclic carboxylates with fluorine can also be suitably used.

[1-5-5. Ether Compound]

Preferred examples of the ether compound, which is one aspect of the nonaqueous solvent in the present embodiment, include linear ethers having 3 to 10 carbon atoms, such as dimethoxymethane, diethoxymethane, ethoxymethoxymethane, ethylene glycol di-n-propyl ether, ethylene glycol di-n-butyl ether, and diethylene glycol dimethyl ether, and cyclic ethers having 3 to 6 carbon atoms, such as tetrahydrofuran, 2-methyltetrahydrofuran, 3-methyltetrahydrofuran, 1,3-dioxane, 2-methyl-1,3-dioxane, 4-methyl-1,3-dioxane, and 1,4-dioxane.

Among these, dimethoxymethane, diethoxymethane, and ethoxymethoxymethane are preferred as linear ethers having 3 to 10 carbon atoms from the viewpoint of having a high solvation ability for lithium ions, improving ion dissociation, having a low viscosity, and providing high ion conductivity. Tetrahydrofuran, 1,3-dioxane, 1,4-dioxane, and the like are preferred as cyclic ethers having 3 to 6 carbon atoms from the viewpoint of providing high ion conductivity.

The content of the ether compound is not particularly limited and is arbitrary as long as the effects of the invention according to the present embodiment are not significantly impaired, and is usually 1 to 30% by volume, preferably 2 to 25% by volume, and more preferably 3 to 20% by volume, with respect to the total amount of the nonaqueous solvent. Here, the above content is usually 1% by volume or more, preferably 2% by volume or more, and more preferably 3% by volume or more, and is usually 30% by volume or less, preferably 25% by volume or less, and more preferably 20% by volume or less. When the content of the ether compound is within the above range, it is easy to secure the effect of improving the degree of dissociation of lithium ions of the ether and the effect of improving ion conductivity caused by a decrease in the viscosity. In addition, when the negative electrode active material is a carbon-based material, it is possible to suppress a phenomenon in which linear ether is co-inserted together with lithium ions, and thus it is possible to set input and output properties or charging and discharging rate properties to be in an appropriate range.

[1-5-6. Sulfone Compound]

The sulfone compound, which is one aspect of the nonaqueous solvent in the present embodiment, is not particularly limited to either a cyclic sulfone or a linear sulfone, and in the case of a cyclic sulfone, the number of carbon atoms is usually 3 to 6, and preferably 3 to 5. In the case of a linear sulfone, the number of carbon atoms is usually 2 to 6, and preferably 2 to 5. In addition, the number of sulfonyl groups in one molecule of the sulfone compound is not particularly limited, and is usually 1 or 2.

Examples of the cyclic sulfone include monosulfone compounds, such as trimethylene sulfones, tetramethylene sulfones, and hexamethylene sulfones; and disulfone compounds, such as trimethylene disulfones, tetramethylene disulfones, and hexamethylene disulfones. Among these, from the viewpoint of dielectric constant and viscosity,

tetramethylene sulfones, tetramethylene disulfones, hexamethylene sulfones, and hexamethylene disulfones are more preferable, and tetramethylene sulfones (sulfolanes) are particularly preferable.

As sulfolanes, sulfolane and/or sulfolane derivatives (hereinafter sometimes abbreviated as "sulfolanes", which include sulfolane) are preferable. The sulfolane derivative is preferably one in which at least one hydrogen atom bonded to a carbon atom constituting a sulfolane ring is substituted with a fluorine atom or an alkyl group.

Among these, 2-methylsulfolane, 3-methylsulfolane, 2-fluorosulfolane, 3-fluorosulfolane, 2,3-difluorosulfolane, 2-trifluoromethylsulfolane, 3-trifluoromethylsulfolane, and the like are preferable from the viewpoint of high ion conductivity and high input and output.

In addition, examples of the linear sulfone include dimethyl sulfone, ethyl methyl sulfone, diethyl sulfone, monofluoromethyl methyl sulfone, difluoromethyl methyl sulfone, trifluoromethyl methyl sulfone, and pentafluoroethyl methyl sulfone. Among these, dimethyl sulfone, ethyl methyl sulfone, and monofluoromethyl methyl sulfone are preferable from the viewpoint of improving high-temperature storage stability of the electrolytic solution.

The content of the sulfone compound is not particularly limited and is arbitrary as long as the effects of the invention according to the present embodiment are not significantly impaired, and is usually 0.3 to 40% by volume, preferably 0.5 to 35% by volume, and more preferably 1 to 30% by volume, with respect to the total amount of the nonaqueous solvent in the nonaqueous electrolytic solution. Here, the above content is usually 0.3% by volume or more, preferably 0.5% by volume or more, and more preferably 1% by volume or more, and is usually 40% by volume or less, preferably 35% by volume or less, and more preferably 30% by volume or less. When the content of the sulfone compound is within the above range, an electrolytic solution having excellent high-temperature storage stability tends to be obtained.

[1-6. Auxiliary Agent]

The nonaqueous electrolytic solution according to the present invention may comprise various auxiliary agents within a range that does not significantly impair the effects of the present invention. Any of the conventionally known auxiliary agents can be used as the auxiliary agent. The auxiliary agent can be used alone or in combination of two or more kinds thereof in an arbitrary ratio.

Examples of the auxiliary agent include a cyclic carbonate having a carbon-carbon unsaturated bond, a fluorine-containing cyclic carbonate, an organic compound having an isocyanate group, an organic compound having an isocyanuric acid skeleton, a sulfur-containing organic compound, a phosphorus-containing organic compound, a silicon-containing compound, an aromatic compound, an organic compound having a cyano group, a fluorine-free carboxylate, a cyclic compound having an ether bond, an acid anhydride, an oxalate, a triple bond-containing compound, a phosphazene compound, a phosphate having a P=O bond, and a salt having an S=O bond. Examples thereof include compounds described in International Publication No. 2015/111676.

Among these, at least one carbonate compound (hereinafter also referred to as a "specific carbonate compound") selected from a cyclic carbonate having a carbon-carbon unsaturated bond and a fluorine-containing cyclic carbonate is preferred.

The content of the auxiliary agent is not particularly limited and is arbitrary as long as the effects of the present invention are not significantly impaired. However, when the nonaqueous electrolytic solution comprises an auxiliary agent, the content of the auxiliary agent is usually 0.001% by mass or more, preferably 0.01% by mass or more, and more preferably 0.1% by mass or more, and is usually 10% by mass or less, preferably 5% by mass or less, more preferably 3% by mass or less, and even more preferably 2% by mass or less, with respect to the total amount of the nonaqueous electrolytic solution. When the nonaqueous electrolytic solution comprises an auxiliary agent, the content of the auxiliary agent is usually 0.001 to 10% by mass, preferably 0.01 to 5% by mass, more preferably 0.1 to 3% by mass, and even more preferably 0.1 to 2% by mass, with respect to the total amount of the nonaqueous electrolytic solution.

The cyclic ether compound can be used as an auxiliary agent in the nonaqueous electrolytic solution, and as shown in [1-5. Nonaqueous Solvent], those that can be used as nonaqueous solvents are also included.

When a cyclic ether compound is used as an auxiliary agent, it is preferably used in an amount of less than 4% by mass, with respect to the total amount of the nonaqueous electrolytic solution. The oxalate and the phosphate having a P=O bond can be used as auxiliary agents in the nonaqueous electrolytic solution, and those that can be used as electrolytes as shown in [1-4. Electrolyte] are also included. When these compounds are used as auxiliary agents, they are preferably used in an amount of less than 3% by mass, with respect to the total amount of the nonaqueous electrolytic solution.

[1-6-1. Specific Carbonate Compound]

The nonaqueous electrolytic solution preferably comprises at least one carbonate compound selected from the group consisting of a cyclic carbonate having a carbon-carbon unsaturated bond and a cyclic carbonate having a fluorine atom as an auxiliary agent. Among these, the nonaqueous electrolytic solution preferably comprises a cyclic carbonate

having a carbon-carbon unsaturated bond, and more preferably comprises vinylene carbonate. These may be used alone or in any combination of two or more thereof in an arbitrary ratio, and it is preferable to comprise at least one carbonate compound selected from the group consisting of an unsaturated cyclic carbonate and a fluorinated cyclic carbonate, more preferable to comprise at least one carbonate compound selected from the group consisting of vinylene carbonate and monofluoroethylene carbonate, and even more preferable to comprise vinylene carbonate.

When a combination of two or more specific carbonate compounds is used, it is preferable to combine an unsaturated cyclic carbonate and a fluorinated cyclic carbonate, it is more preferable to combine vinylene carbonate and a fluorinated cyclic carbonate and to combine an unsaturated cyclic carbonate and monofluoroethylene carbonate, and it is still more preferable to combine vinylene carbonate and monofluoroethylene carbonate.

(Content of specific carbonate compound)

When the nonaqueous electrolytic solution comprises a specific carbonate compound as an auxiliary agent, the content of the specific carbonate compound (the total amount in the case of two or more kinds) in the total amount of the nonaqueous electrolytic solution is usually 0.001% by mass or more, preferably 0.01% by mass or more, more preferably 0.1% by mass or more, and even more preferably 0.5% by mass or more, and is usually 10% by mass or less, preferably 5% by mass or less, more preferably 4% by mass or less, and even more preferably 3% by mass or less. When the nonaqueous electrolytic solution comprises a specific carbonate compound as an auxiliary agent, the content of the specific carbonate compound (the total amount in the case of two or more kinds) in the total amount of the nonaqueous electrolytic solution is usually 0.001 to 10% by mass, preferably 0.01 to 5% by mass, more preferably 0.1 to 4% by mass, and even more preferably 0.5 to 3% by mass.

When the content of the specific carbonate compound is within the above range, battery characteristics, particularly the increase in the internal resistance, can be suppressed. Although the reason for this is not clear, it is considered that by comprising the carbonate compound in this ratio, a surface film is formed on an electrode, and a side reaction of a component of the nonaqueous electrolytic solution can be suppressed to a minimum.

Identification of the specific carbonate compound and measurement of the content thereof are performed by nuclear magnetic resonance (NMR) spectroscopy.

(Mass ratio of compound represented by general formula (I) and specific carbonate compound)

When the nonaqueous electrolytic solution comprises a specific carbonate compound as an auxiliary agent, the mass ratio of the content of the specific carbonate compound (the total amount in the case of two or more kinds) to the content of the compound represented by the general formula (I) (specific carbonate compound [g]/compound represented by the general formula (I) [g]) is usually 0.01 or more, preferably 0.05 or more, more preferably 0.1 or more, and even more preferably 0.2 or more, and is usually 100 or less, preferably 50 or less, more preferably 25 or less, and even more preferably 10 or less. In addition, the mass ratio (specific carbonate compound [g]/compound represented by the general formula (I) [g]) is usually 0.01 to 100, preferably 0.05 to 50, more preferably 0.1 to 25, and even more preferably 0.2 to 10. When the mass ratio is within the above range, battery characteristics, particularly the increase in the internal resistance, can be suppressed. The reason for this is not clear, but it is considered that when the specific carbonate compound is comprised in the above mass ratio range, a surface film is formed on an electrode, and a side reaction of a component of the nonaqueous electrolytic solution can be suppressed to a minimum.

(Mass ratio of electrolyte and specific carbonate compound)

When the nonaqueous electrolytic solution comprises a specific carbonate compound as an auxiliary agent, the mass ratio of the content of the specific carbonate compound (the total amount in the case of two or more kinds) to the content of the electrolyte in the nonaqueous electrolytic solution (specific carbonate compound [g]/electrolyte [g]) is usually 0.00005 or more, preferably 0.001 or more, more preferably 0.01 or more, even more preferably 0.02 or more, and still more preferably 0.025 or more, and is usually 0.5 or less, preferably 0.45 or less, more preferably 0.4 or less, and even more preferably 0.35 or less. The mass ratio (specific carbonate compound [g]/electrolyte [g]) is usually 0.00005 to 0.5, preferably 0.001 to 0.45, more preferably 0.01 to 0.4, even more preferably 0.02 to 0.35, and still more preferably 0.025 to 0.35. When the mass ratio is within the above range, battery characteristics, particularly the increase in the internal resistance, can be suppressed. The reason for this is not clear, but it is considered that when the specific carbonate compound and the electrolyte are comprised in the above mass ratio range, a surface film is formed on an electrode, and a side reaction of the electrolyte in the battery system can be suppressed to a minimum.

[1-6-1-1. Cyclic Carbonates Having Carbon-Carbon Unsaturated Bond]

The cyclic carbonate having a carbon-carbon unsaturated bond (hereinafter also referred to as "unsaturated cyclic carbonate") is not particularly limited as long as it is a cyclic carbonate having a carbon-carbon double bond or a carbon-carbon triple bond. A cyclic carbonate having an aromatic ring is also included in the unsaturated cyclic carbonate.

Examples of the unsaturated cyclic carbonate include vinylene carbonates, ethylene carbonates substituted with a substituent having an aromatic ring, a carbon-carbon double bond, or a carbon-carbon triple bond, phenyl carbonates, vinyl carbonates, allyl carbonates, and catechol carbonates. Among these, vinylene carbonates and ethylene carbonates substituted with a substituent having an aromatic ring, a carbon-carbon double bond, or a carbon-carbon triple bond are preferable.

Examples of the vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-vinylvinylene carbonate, allylvinylene carbonate, and 4,5-diallylvinylene carbonate.

Examples of the ethylene carbonates substituted with a substituent having an aromatic ring, a carbon-carbon double bond, or a carbon-carbon triple bond include vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, 4-allyl-5-ethynylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, and 4-methyl-5-allylethylene carbonate.

Among these, vinylene carbonate, vinylethylene carbonate, and ethynylethylene carbonate are preferable because they form a more stable composite surface film on an electrode, one or more selected from vinylene carbonate and vinylethylene carbonate are more preferable, and vinylene carbonate is still more preferable.

The unsaturated cyclic carbonate may be used alone or in combination of two or more thereof in an arbitrary ratio.

[1-6-1-2. Cyclic Carbonate Having Fluorine Atom]

The cyclic carbonate having a fluorine atom is not particularly limited as long as it has a cyclic carbonate structure and has a fluorine atom.

Examples of the cyclic carbonate having a fluorine atom include a fluorinated product of a cyclic carbonate having an alkylene group having 2 to 6 carbon atoms and a derivative thereof, and examples thereof include a fluorinated product of ethylene carbonate (fluoroethylene carbonate) and a derivative thereof, and ethylene carbonate having a fluorine-containing group. Examples of the derivative of the fluorinated product of ethylene carbonate include a fluorinated product of ethylene carbonate substituted with an alkyl group (for example, an alkyl group having 1 to 4 carbon atoms). Among these, a fluoroethylene carbonate having 1 to 8 fluorine atoms and a derivative thereof are preferable.

Examples of the fluoroethylene carbonate having 1 to 8 fluorine atoms, the derivative thereof, and the ethylene carbonate having a fluorine-containing group include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Among these, one or more selected from monofluoroethylene carbonate, 4,4-difluoroethylene carbonate, and 4,5-difluoroethylene carbonate are preferable from the viewpoint of imparting high ion conductivity to the electrolytic solution and facilitating formation of a stable interface protective surface film.

The cyclic carbonate having a fluorine atom may be used alone or in combination of two or more thereof in an arbitrary ratio.

[1-6-2. Organic Compound Having Isocyanate Group]

The organic compound having an isocyanate group is not particularly limited as long as it is an organic compound having at least one isocyanate group in the molecule. The number of isocyanate groups in one molecule is preferably 1 to 4, more preferably 2 or 3, and even more preferably 2.

Examples of the organic compound having an isocyanate group include a monoisocyanate compound, such as methyl isocyanate, ethyl isocyanate, butyl isocyanate, vinyl isocyanate, propargyl isocyanate, cyclohexyl isocyanate, phenyl isocyanate, 2-isocyanatoethyl acrylate, and 2-isocyanatoethyl methacrylate; and a diisocyanate compound, such as monomethylene diisocyanate, tetramethylene diisocyanate, hexamethylene diisocyanate, octamethylene diisocyanate, 1,4-phenylene diisocyanate, 1,3-diisocyanatopropane, 1,3-bis(isocyanatomethyl)cyclohexane, carbonyl diisocyanate, and 1,4-diisocyanato-2- fluorobutane.

In particular, from the viewpoint of forming a stable interface protective surface film, an organic compound having at least two isocyanate groups are preferred, hexamethylene diisocyanate and 1,3-bis(isocyanatomethyl)cyclohexane are more preferred, and 1,3-bis(isocyanatomethyl)cyclohexane is even more preferred.

[1-6-3. Organic Compound Having Isocyanuric Acid Skeleton]

The organic compound having an isocyanuric acid skeleton (hereinafter also referred to as an "isocyanurate compound") is not particularly limited as long as it has at least one isocyanuric acid skeleton in the molecule. Examples of the organic compound having an isocyanuric acid skeleton include the following compounds.

[Chem. 12]

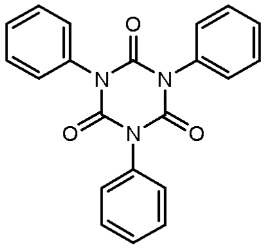
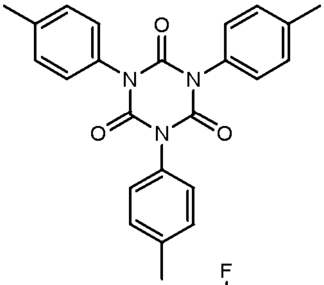
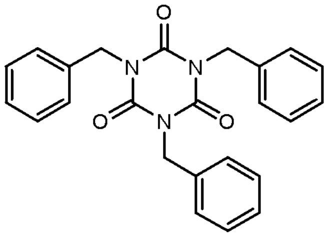
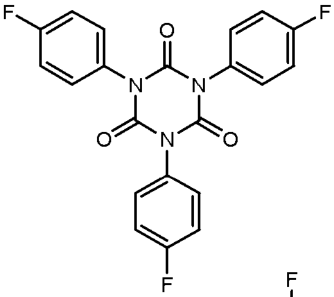
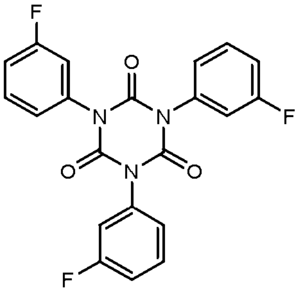
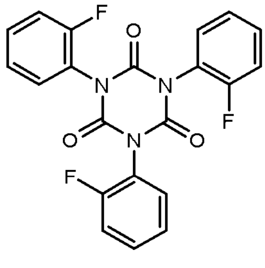
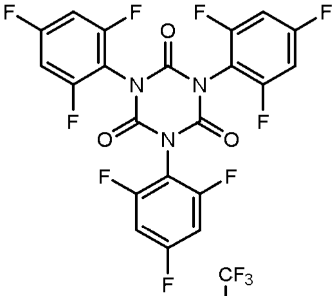
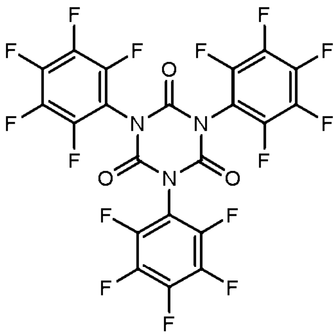
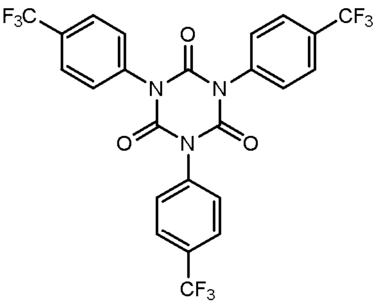
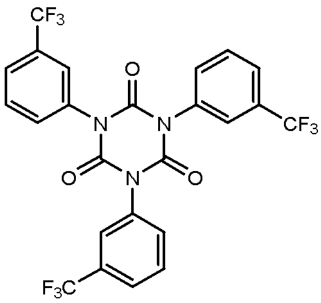
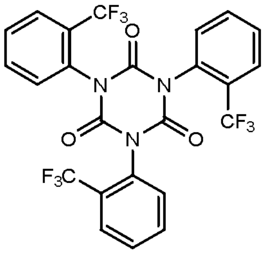
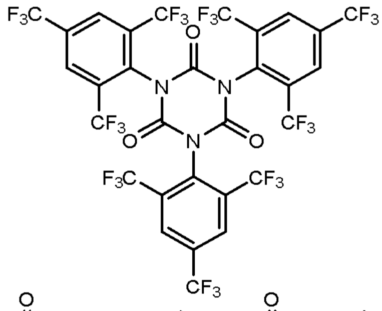
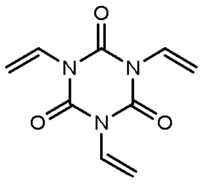
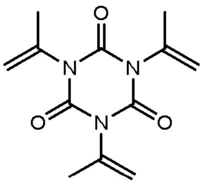
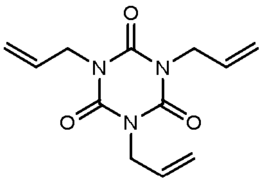
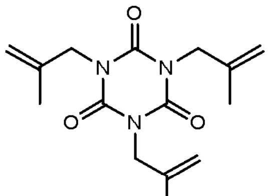
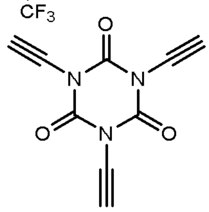
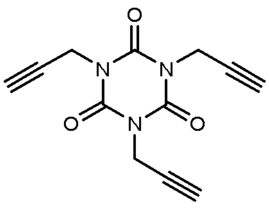
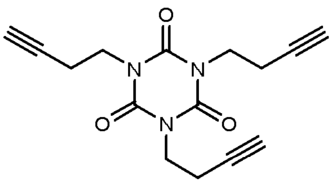
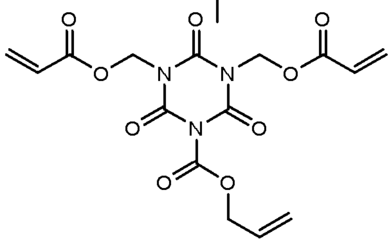

In particular, from the viewpoint of forming a stable interface protective surface film, an isocyanurate compound having a saturated or unsaturated aliphatic hydrocarbon group that may have a halogen atom is preferred, an isocyanurate compound having an unsaturated aliphatic hydrocarbon group comprising a carbon-carbon unsaturated bond at an end is more preferred, and triallyl isocyanurate is even more preferred.

[1-6-4. Sulfur-Containing Organic Compound]

The sulfur-containing organic compound is not particularly limited as long as it is an organic compound having at least one sulfur atom (S) in the molecule. Preferred examples include an organic compound having at least one S=O bond, and more preferred examples include an ester compound having an S=O bond, such as a linear sulfonate ester, a cyclic sulfonate ester, a linear sulfate ester, a cyclic sulfate ester, a linear sulfite ester, and a cyclic sulfite ester. However, those that correspond to salts having an S=O bond are not "sulfur-containing organic compounds" but are included in the "salts having an S=O bond" to be described later. In addition, compounds that correspond to anion-containing compounds having an S=O bond and an S-F bond are not "sulfur-containing organic compounds" but are included in the above "anion-containing compounds having an S=O bond and an S-F bond". In addition, compounds that correspond to alkyl sulfate anion-containing compounds are not "sulfur-containing organic compounds" but are included in the above "alkyl sulfate anion-containing compounds".

Examples of the sulfur-containing organic compounds include:

a linear sulfonate ester such as an alkyl disulfonate ester, such as methyl fluorosulfonate, methyl methanesulfonate, ethyl methanesulfonate, busulfan, methyl methanesulfonyloxyacetate, methyl vinylsulfonate, allyl vinylsulfonate, propargyl allylsulfonate, methoxycarbonylmethyl methanedisulfonate, ethoxycarbonylmethyl methanedisulfonate, methoxycarbonylmethyl 1,3-butanedisulfonate, ethoxycarbonylmethyl 1,3-butanedisulfonate, 1-methoxycarbonylethyl 1,3-butanedisulfonate, and 1-ethoxycarbonylethyl 1,3-butanedisulfonate;
a cyclic sulfonate ester, such as 1,3-propane sultone, 1-fluoro-1,3-propane sultone, 1-methyl-1,3-propane sultone, 1-propene-1,3-sultone, 2-propene-1,3-sultone, 1-fluoro-1-propene-1,3-sultone, 1-methyl-1-propene-1,3-sultone, 1,3-butane sultone, 2,4-butane sultone, 1,4-butane sultone, 1,5-pentane sultone, methylenemethane disulfonate, ethylenemethane disulfonate, and 2,2-dioxide-1,2-oxathiolan-4-yl acetate;
a linear sulfate ester, such as dimethyl sulfate, ethyl methyl sulfate, and diethyl sulfate;
a cyclic sulfate ester, such as 1,2-ethylene sulfate, 1,2-propylene sulfate, 1,3-propylene sulfate, and 1,2-butylene sulfate;
a linear sulfite ester, such as dimethyl sulfite, ethyl methyl sulfite, and diethyl sulfite;
a cyclic sulfite ester, such as 1,2-ethylene sulfite, 1,2-propylene sulfite, 1,3-propylene sulfite, and 1,2-butylene sulfite;
a cyclic sulfone, such as 1,1-dioxidetetrahydrothiophen-3-yl methanesulfonate and 1,1-dioxide-2,3-dihydrothiophen-3-yl methanesulfonate;
a sulfonate ester, such as butane-2,3-diyl dimethanesulfonate, butane-1,4-diyl dimethanesulfonate, and methylenemethane disulfonate; and
a vinyl sulfone compound, such as divinyl sulfone, 1,2-bis(vinylsulfonyl)ethane, and bis(2-vinylsulfonylethyl)ether.

In particular, from the viewpoint of forming a stable interface protective surface film, a linear or cyclic sulfonate ester, a cyclic sulfate, or a cyclic sulfite is more preferable, a cyclic sulfonate ester or a cyclic sulfate is particularly preferable, and 1,3-propane sultone, methylenemethane disulfonate, and 1,2-ethylene sulfate are most preferable.

[1-6-5. Phosphorus-containing Organic Compound]

The phosphorus-containing organic compound is not particularly limited as long as it is a compound that has at least one phosphorus atom in the molecule. However, those that correspond to salts having a P=O bond are not "phosphorus-containing organic compounds" but are included in the "salts having a P=O bond" to be described later. In addition, those that correspond to anion-containing compounds having a P=O bond and a P-F bond are not "phosphorus-containing organic compounds" but are included in the above "anion-containing compounds having a P=O bond and a P-F bond".

Examples of the phosphorus-containing organic compounds include trimethyl phosphate, tributyl phosphate, trioctyl phosphate, tris(2,2,2-trifluoroethyl) phosphate, ethyl 2-(diethoxyphosphoryl)acetate, and 2-propynyl 2-(diethoxyphosphoryl)acetate.

In particular, ethyl 2-(diethoxyphosphoryl)acetate or 2-propynyl 2-(diethoxyphosphoryl)acetate is preferred, and 2-propynyl 2-(diethoxyphosphoryl)acetate is even more preferred.

[1-6-6. Silicon-Containing Compound]

The silicon-containing compound is not particularly limited as long as it is a compound that has at least one silicon atom in the molecule.

Examples of the silicon-containing compounds include:

a borate compound, such as tris(trimethylsilyl) borate, tris(trimethoxysilyl) borate, tris(triethylsilyl) borate, and tris(dimethylvinylsilyl) borate;

a phosphate compound, such as tris(trimethylsilyl) phosphate, tris(triethylsilyl) phosphate, tris(triphenylsilyl) phosphate, tris(trimethoxysilyl) phosphate, and tris(dimethylvinylsilyl) phosphate;

a phosphite compound, such as tris(trimethylsilyl) phosphite, tris(triethylsilyl) phosphite, tris(triphenylsilyl) phosphite, tris(trimethoxysilyl) phosphite, and tris(dimethylvinylsilyl) phosphite;

a sulfonate compound, such as trimethylsilyl methanesulfonate and trimethylsilyl tetrafluoromethanesulfonate;

a silane compound, such as tetramethylsilane, trimethylvinylsilane, dimethyldivinylsilane, methyltrivinylsilane and tetravinylsilane;

a disilane compound, such as hexamethyldisilane, hexaethyldisilane, 1,1,2,2-tetramethyldisilane and 1,2-diphenyltetramethyldisilane; and

a disiloxane compound, such as hexamethyldisiloxane, 1,3-divinyltetramethyldisiloxane and 1,1,3,3-tetramethyl-1,3-diphenyldisiloxane.

In particular, from the viewpoint of forming a stable interface protective surface film, a disilane compound and a disiloxane compound are preferred, a disiloxane compound is more preferred, hexamethyldisiloxane and 1,3-divinyltetramethyldisiloxane are even more preferred, and 1,3-divinyltetramethyldisiloxane is particularly preferred.

[1-6-7. Aromatic Compound]

The aromatic compound is not particularly limited as long as it is a compound that has an aromatic group in the molecule. Examples of the aromatic compound include aromatic compounds having a branched alkyl group, such as cyclohexylbenzene, tert-butylbenzene, tert-amylbenzene, and 1-fluoro-4-tert-butylbenzene, and aromatic compounds such as biphenyl, terphenyl (o-, m-, p-forms), fluorobenzene, methylphenyl carbonate, ethylphenyl carbonate, and diphenyl carbonate.

In particular, biphenyl, terphenyl (o-, m-, p-forms), fluorobenzene, cyclohexylbenzene, tert-butylbenzene, and tert-amylbenzene are more preferred, and biphenyl, o-terphenyl, fluorobenzene, cyclohexylbenzene, and tert-amylbenzene are even more preferred.

[1-6-8. Organic Compound Having a Cyano Group]

The organic compound having a cyano group is not particularly limited as long as it is an organic compound having at least one cyano group in the molecule.

Examples of the organic compound having a cyano group include:

an organic compound having one cyano group in the molecule, such as acetonitrile, propionitrile, butyronitrile, pentanenitrile, hexanenitrile, decanenitrile, undecanenitrile, dodecanenitrile, cyclohexanecarbonitrile, acrylonitrile, methacrylonitrile, and crotononitrile;

an organic compound having two cyano groups in the molecule, such as succinonitrile, glutaronitrile, adiponitrile, pimelonitrile, suberonitrile, sebaconitrile, methylmalononitrile, ethylmalononitrile, bicyclohexyl-1,1-dicarbonitrile, 1,4-dicyanopentane, and 1,2-dicyanobenzene; and

an organic compound having three cyano groups in the molecule, such as 1,2,3-propanetricarbonitrile, 1,2,3-tris(2-cyanoethoxy)propane, 1,3,5-cyclohexanetricarbonitrile, and 1,3,5-benzenetricarbonitrile.

In particular, from the viewpoint of forming a stable interface protective surface film, an organic compound having two cyano groups is preferred, succinonitrile and adiponitrile are more preferred, and adiponitrile is even more preferred.

[1-6-9. Fluorine-Free Carboxylate]

The fluorine-free carboxylate is not particularly limited as long as it is a carboxylate that does not have a fluorine atom in the molecule. A fluorine-free linear carboxylate is preferred, and a fluorine-free saturated linear carboxylate is more preferred. The total number of carbon atoms in the fluorine-free linear carboxylate is preferably 3 or more, and more preferably 4 or more, and is preferably 7 or less, more preferably 6 or less, and even more preferably 5 or less. In addition, the total number of carbon atoms in the fluorine-free linear carboxylate is preferably 3 to 7, more preferably 4 to 6, and even more preferably 4 to 5.

Examples of the linear carboxylate include methyl acetate, ethyl acetate, n-propyl acetate, isopropyl acetate, n-butyl acetate, isobutyl acetate, methyl propionate, ethyl propionate, n-propyl propionate, isopropyl propionate, n-butyl propionate, methyl pivalate, ethyl pivalate, n-propyl pivalate, isopropyl pivalate, n-butyl pivalate, methyl acrylate, ethyl

acrylate, methyl methacrylate, ethyl methacrylate, methyl crotonate, ethyl crotonate, and methyl 2-propionate.

In particular, from the viewpoint of improving the output properties of the battery, methyl acetate, ethyl acetate, methyl propionate, ethyl propionate, and n-propyl propionate are preferred, and methyl propionate is more preferred.

[1-6-10. Cyclic Compound Having Ether Bond]

The cyclic compound having an ether bond is not particularly limited as long as it is a compound having one or more ether bonds in the molecule. Examples of the cyclic compound having an ether bond include a cyclic acetal compound, such as 1,3-dioxolane, 1,3-dioxane, and 1,3,5-trioxane.

In particular, a cyclic acetal compound is preferred, 1,3-dioxolane or 1,3-dioxane is preferred, and 1,3-dioxane is even more preferred.

[1-6-11. Acid Anhydride]

The acid anhydride is not particularly limited as long as it has a "C(=O)-O-C(=O) group", a "C(=O)-O-S(=O)$_2$ group", or an "S(=O)$_2$-O-S(=O)$_2$ group" in the molecule. Examples of the acid anhydride include a linear carboxylic acid anhydride, such as acetic anhydride, acrylic anhydride, methacrylic anhydride, cyclohexane carboxylic anhydride, propynoic anhydride, benzoic anhydride, fluoroacetic anhydride, 4-fluorobenzoic anhydride, and acetic acid propionic anhydride, succinic anhydride, maleic anhydride, citraconic anhydride, glutaric anhydride, itaconic anhydride, fluorosuccinic anhydride, allylsuccinic anhydride, 1,2-oxathiolan-5-one 2,2-dioxide, and 1,2,6-oxadithiane 2,2,6,6-tetraoxide.

In particular, from the viewpoint of forming a stable interface protective surface film, methacrylic anhydride, succinic anhydride, maleic anhydride, and allyl succinic anhydride are preferred, and succinic anhydride or allyl succinic anhydride is more preferred.

[1-6-12. Oxalate]

The oxalate is not particularly limited as long as it is a salt having an oxalic acid skeleton in the molecule.

(Counter cation)

Examples of the counter cation for oxalates include an alkali metal, such as lithium, sodium, and potassium, with lithium being preferred.

Examples of oxalates include lithium bis(oxalato)borate, lithium difluorooxalatoborate, lithium tetrafluorooxalatophosphate, lithium difluorobis(oxalato)phosphate, and lithium tris(oxalato)phosphate.

In particular, from the viewpoint of forming a stable interface protective surface film, lithium bis(oxalato)borate is preferred.

[1-6-13. Triple Bond-Containing Compound]

The triple bond-containing compound is not particularly limited as long as it is a compound having at least one triple bond in the molecule. Examples of the triple bond-containing compound include 2-propynyl methyl carbonate, 2-propynyl acetate, 2-propynyl formate, 2-propynyl methacrylate, 2-propynyl methanesulfonate, 2-propynyl vinylsulfonate, 2-propynyl 2-(methanesulfonyloxy)propionate, di(2-propynyl)oxalate, 2-butyne-1,4-diyl dimethanesulfonate, and 2-butyne-1,4-diyl diformate.

In particular, 2-propynyl methyl carbonate, 2-propynyl methacrylate, 2-propynyl methanesulfonate, 2-propynyl vinylsulfonate, di(2-propynyl)oxalate and 2-butyne-1,4-diyl dimethanesulfonate are preferred, and 2-propynyl methanesulfonate, 2-propynyl vinylsulfonate, di(2-propynyl)oxalate and 2-butyne-1,4-diyl dimethanesulfonate are more preferred.

[1-6-14. Phosphazene Compound]

The phosphazene compound is not particularly limited as long as it is a compound having an "N=P-N group" in the molecule. Examples of the phosphazene compound include a cyclic phosphazene compound, such as methoxypentafluorocyclotriphosphazene, ethoxypentafluorocyclotriphosphazene, phenoxypentafluorocyclotriphosphazene, and ethoxyheptafluorocyclotetraphosphazene.

In particular, cyclic phosphazene compounds such as methoxypentafluorocyclotriphosphazene, ethoxypentafluorocyclotriphosphazene, and phenoxypentafluorocyclotriphosphazene are preferred, and methoxypentafluorocyclotriphosphazene and ethoxypentafluorocyclotriphosphazene are even more preferred.

[1-6-15. Phosphate Salt Having a P=O Bond]

The salt having a P=O bond is not particularly limited as long as it is a phosphate salt having a P=O bond in the molecule.

(Counter cation)

Examples of the counter cation for a salt having a P=O bond include ions of alkali metals such as lithium, sodium, and potassium, with lithium ions being preferred.

Examples of the salt having a P=O bond include a phosphonate, such as lithium ethyl methoxycarbonylphosphonate, lithium ethyl ethoxycarbonylphosphonate, and lithium ethyl iso-butoxycarbonylphosphonate.

[1-6-16. Salt Having an S=O Bond]

The salt having an S=O bond is not particularly limited as long as it is a salt having an S=O bond in the molecule, and any salt can be used as long as it does not significantly impair the effects of the present invention.

(Counter cation)

Examples of the counter cation for a salt having an S=O bond include ions of alkali metals such as lithium, sodium, and potassium, with lithium ions being preferred.

Examples of the salt having an S=O bond include a salt having a methanesulfonyl group, such as lithium trifluoro((methanesulfonyl)oxy)borate [LiTFMSB] and lithium pentafluoro((methanesulfonyl)oxy)phosphate [LiPFMSP].

(Mass ratio of electrolyte and auxiliary agent)

When the nonaqueous electrolytic solution comprises an auxiliary agent other than the specific carbonate compound as an auxiliary agent, the mass ratio of the content of the auxiliary agent (the total amount in the case of two or more kinds) to the content of the electrolyte in the nonaqueous electrolytic solution (auxiliary agent [g]/electrolyte [g]) is usually 0.00005 or more, preferably 0.001 or more, more preferably 0.01 or more, even more preferably 0.02 or more, and still more preferably 0.025 or more, and is usually 0.5 or less, preferably 0.45 or less, more preferably 0.4 or less, and even more preferably 0.35 or less. In addition, when the nonaqueous electrolytic solution comprises an auxiliary agent other than the specific carbonate compound as an auxiliary agent, the mass ratio of the content of the auxiliary agent (the total amount in the case of two or more kinds) to the content of the electrolyte in the nonaqueous electrolytic solution (auxiliary agent [g]/electrolyte [g]) is usually 0.00005 to 0.5, preferably 0.001 to 0.45, more preferably 0.01 to 0.4, even more preferably 0.02 to 0.35, and still more preferably 0.025 to 0.35. When the mass ratio is within the above range, battery characteristics, particularly the increase in the internal resistance, can be suppressed. The reason for this is not clear, but it is considered that when the auxiliary agent and the electrolyte are comprised in the above mass ratio range, a surface film is formed on an electrode, and a side reaction of the electrolyte in the battery system can be suppressed to a minimum.

<2. Nonaqueous Electrolytic Solution Battery>

The configuration of the nonaqueous electrolytic solution battery of the present invention, excluding the nonaqueous electrolytic solution, will be described below using a lithium ion secondary battery as an example.

The nonaqueous electrolytic solution battery of the present invention comprises at least a positive electrode and a negative electrode, both of which are capable of absorbing and releasing metal ions, and a nonaqueous electrolytic solution.

[2-1. Positive Electrode]

The positive electrode has a positive electrode active material capable of absorbing and releasing lithium ions on at least a part of a surface of a collector. The positive electrode active material includes a lithium transition metal-based compound.

[2-1-1. Positive Electrode Active Material]

Hereinafter, the positive electrode active material (lithium transition metal-based oxide) used in the positive electrode will be described.

[2-1-1-1. Lithium Transition Metal-Based Oxide]

The lithium transition metal oxide is a compound having a structure capable of desorbing and inserting lithium ions, and is represented by the following composition formula (1).

$$Li_{1+y}M^1O_2 \qquad (1)$$

In the composition formula (1), y is -0.2 to 0.5, $M^1$ represents an element comprising at least Ni element, and the molar ratio ($Ni/M^1$) of the content of Ni element to the content of all elements comprised in $M^1$ is preferably 0.40 or more, more preferably 0.50 or more, and even more preferably 0.55 or more, and is preferably 1.00 or less, and more preferably 0.90 or less. The molar ratio ($Ni/M^1$) is preferably 0.40 to 1.00, more preferably 0.50 to 0.90, and even more preferably 0.55 to 0.90. When the molar ratio ($Ni/M^1$) is within this range, the compound represented by the general formula (I) is more likely to form a surface film on the positive electrode, and side reactions between the positive electrode and the nonaqueous electrolytic solution are suppressed, thereby improving the DCR retention rate during operation at high temperatures of the nonaqueous electrolytic solution battery, and suppressing an increase in the gas generation amount during operation at high temperatures.

Specific examples of the lithium transition metal oxide represented by the composition formula (1) include $LiNiO_2$, $LiNi_{0.85}Co_{0.10}Al_{0.05}O_2$, $LiNi_{0.80}Co_{0.15}Al_{0.05}O_2$, $LiNi_{0.5}Co_{0.2}Mn_{0.3}O_2$, $Li_{1.05}Ni_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$, $Li_{1.0}Ni_{0.82}Co_{0.11}Mn_{0.07}O_2$, $LiNi_{0.91}Co_{0.06}Mn_{0.03}O_2$, $LiNi_{0.91}Co_{0.06}Al_{0.03}O_2$, $LiNi_{0.90}Co_{0.03}Al_{0.07}O_2$, and $Li_{1.00}Ni_{0.61}Co_{0.20}Mn_{0.19}O_2$.

Among these, from the viewpoint of improving battery capacity, a lithium transition metal composite oxide having a layered structure is preferred, and a lithium transition metal composite oxide represented by the following composition formula (2) is more preferred.

$$Li_{a1}Ni_{b1}M^2_{c1}O_2 \qquad (2)$$

In the composition formula (2), $M^2$ represents at least one element selected from the group consisting of Co, Mn, Al, Mg, Zr, Fe, Ti, and Er, a1, b1, and c1 satisfy $0.80 \leq a1 \leq 1.10$, $0.40 \leq b1 \leq 0.99$, and $0.01 \leq c1 \leq 0.60$, respectively, and $b1 + c1 = 1$.

In the composition formula (2), b1 is preferably 0.50 to 0.98, more preferably 0.60 to 0.98, even more preferably 0.70 to 0.98, and still more preferably 0.80 to 0.98.

In particular, from the viewpoint of the structural stability of the lithium transition metal composite oxide, a lithium transition metal composite oxide represented by the following composition formula (3) is preferable.

$$Li_{a2}Ni_{b2}Co_{c2}M^3_{d2}O_2 \qquad (3)$$

In the composition formula (3), $M^3$ represents at least one element selected from the group consisting of Mn, Al, Mg, Zr, Fe, Ti, and Er, a2, b2, c2, and d2 satisfy $0.80 \leq a2 \leq 1.10$, $0.40 \leq b2 \leq 0.98$, $0.01 \leq c2 \leq 0.59$, and $0.01 \leq d2 \leq 0.59$, respectively, and $b2 + c2 + d2 = 1$.

In the above composition formula (3), b2 is preferably 0.50 to 0.98, more preferably 0.60 to 0.98, even more preferably 0.70 to 0.98, and still more preferably 0.80 to 0.98. Also, d2 is preferably 0.10 to 0.59.

Suitable examples of the lithium transition metal composite oxide represented by the above composition formula (3) include $LiNi_{0.85}Co_{0.10}Al_{0.05}O_2$, $LiNi_{0.80}Co_{0.15}Al_{0.05}O_2$, $LiNi_{0.8}Co_{0.1}Mn_{0.1}O_2$, $LiNi_{0.91}Co_{0.06}Mn_{0.03}O_2$, $LiNi_{0.91}Co_{0.06}Al_{0.03}O_2$, $LiNi_{0.90}Co_{0.03}Al_{0.07}O_2$, $Li_{1.0}Ni_{0.82}Co_{0.11}Mn_{0.07}O_2$, and $Li_{1.00}Ni_{0.61}Co_{0.20}Mn_{0.19}O_2$.

In the above composition formula (1) or (2), from the viewpoint of improving the structural stability of the lithium transition metal oxide and suppressing structural deterioration during repeated charging and discharging, $M^1$ or $M^2$ preferably comprises Mn or Al, and more preferably comprises Mn.

In the above composition formula (3), from the viewpoint of improving the structural stability of the lithium transition metal composite oxide and suppressing structural deterioration during repeated charging and discharging, $M^3$ preferably comprises Mn or Al, and more preferably comprises Mn.

Identification of the positive electrode active material is performed by ICP emission spectroscopy after wet decomposition of the sample.

[2-1-1-2. Introduction of Foreign Element]

The lithium transition metal oxide may comprise an element (foreign element) other than the elements included in any one of the above composition formulas (1) to (3).

[2-1-1-3. Surface Coating]

As the positive electrode, a positive electrode in which a material having a composition different from that of the positive electrode active material (surface adhered material) is adhered to the surface of the positive electrode active material may be used.

Examples of the surface adhered material include an oxide, such as aluminum oxide, a sulfate, such as lithium sulfate, and a carbonate, such as lithium carbonate. The surface adhered material can be adhered to the surface of the positive electrode active material by, for example, a method in which the material is dissolved or suspended in a solvent, impregnated into the positive electrode active material, and dried.

The amount of the surface adhered material is preferably 1 μmol/g or more, and more preferably 10 μmol/g or more, and is usually preferably 1 mmol/g or less, with respect to the positive electrode active material.

In the present specification, a material in which the above-mentioned surface adhered material is adhered to the surface of a positive electrode active material is also referred to as a "positive electrode active material".

[2-1-1-4. Blend]

The positive electrode active material may be used alone or in combination of two or more thereof in an arbitrary ratio.

[2-1-2. Configuration and Production Method of Positive Electrode]

A positive electrode using the positive electrode active material can be produced by an ordinary method. That is, the positive electrode can be obtained by a coating method in which a positive electrode active material and a binder and, if necessary, an electroconductive material, a thickener, and the like are mixed by a dry method and formed into a sheet, and the sheet is pressure-bonded to a positive electrode collector, or these materials are dissolved or dispersed in a liquid medium, such as an aqueous solvent or an organic solvent, to form a slurry, and the slurry is applied onto a positive electrode collector and dried to form a positive electrode active material layer on the collector. Further, for example, the positive electrode active material may be formed into a sheet electrode by roll forming or may be formed into a pellet electrode by compression molding.

Hereinafter, a case where the slurry is sequentially applied onto the positive electrode collector and dried will be described.

[2-1-2-1. Content of Positive Electrode Active Material]

The content of the positive electrode active material in the positive electrode active material layer is usually 80 to 99.5% by mass.

[2-1-2-2. Electrode Density]

The positive electrode active material layer obtained by coating and drying a binder, a conductive material, etc., is preferably compacted by a hand press, a roller press, or the like in order to increase the filling density of the positive electrode active material. The density of the positive electrode active material layer present on the collector is usually 1.5 to 4.5 g/cm$^3$.

[2-1-2-3. Binder]

In the case where the positive electrode active material layer is formed by a coating method, the type of the binder is not particularly limited as long as the binder is a material that is dissolved or dispersed in a liquid medium for slurry. Preferable examples thereof include, in view of weather resistance, chemical resistance, heat resistance, flame retardancy, and the like, a fluorine-based resin, such as polyvinyl fluoride, polyvinylidene fluoride, and polytetrafluoroethylene, and a CN group-containing polymer, such as polyacrylonitrile and polyvinylidene cyanide.

In addition, a mixture, a modified product, a derivative, a random copolymer, an alternating copolymer, a graft copolymer, a block copolymer, and the like of the above-described polymer and the like can also be used. The binder may be used alone or in combination of two or more thereof in an arbitrary ratio.

When a resin is used as the binder, the weight-average molecular weight of the resin is arbitrary as long as the effects of the present invention are not impaired, and is usually 10,000 to 3,000,000. When the molecular weight is in this range, the strength of the electrode is improved, and the electrode can be suitably formed.

The content of the binder in the positive electrode active material layer is usually 0.1 to 80% by mass.

[2-1-2-4. Electroconductive Material]

As the electroconductive material, any known electroconductive material can be used. Specific examples thereof include a metal material, such as copper and nickel; graphite, such as natural graphite and artificial graphite; carbon black, such as acetylene black; and a carbon-based material, such as amorphous carbon, such as needle coke. The electroconductive material may be used alone or in combination of two or more thereof in an arbitrary ratio. The electroconductive material is usually used so as to be comprised in the positive electrode active material layer in an amount of 0.01 to 50% by mass.

[2-1-2-5. Collector]

The material of the positive electrode collector is not particularly limited, and any known material can be used. Specific examples thereof include a metal material, such as aluminum, stainless steel, nickel plating, titanium, and tantalum, and aluminum is preferable.
Examples of the shape of the collector include a metal foil, a metal cylinder, a metal coil, a metal plate, a metal thin film, an expanded metal, a punched metal, and a foamed metal. Among these, a metal foil or a metal thin film is preferable. Note that the metal thin film may be appropriately formed in a mesh shape.
In the case where the collector for the positive electrode has a plate shape, a film shape, or the like, the collector may have any desired thickness, but the thickness is usually 1 μm to 1 mm.

[2-1-2-6. Thickness of Positive Electrode Plate]

The thickness of the positive electrode plate is not particularly limited, and from the viewpoint of high capacity and high output, the thickness of the positive electrode active material layer obtained by subtracting the thickness of the collector from the thickness of the positive electrode plate is usually 10 to 500 μm with respect to one surface of the collector.

[2-1-2-7. Surface Coating of Positive Electrode Plate]

The positive electrode plate may have a surface to which a material having a composition different from that of the positive electrode plate is adhered. As the material, the same material as the surface adhered material that may be adhered to the surface of the positive electrode active material is used.

[2-2. Negative Electrode]

The negative electrode has a negative electrode active material capable of absorbing and releasing lithium ions on at least a part of a collector surface.

[2-2-1. Negative Electrode Active Material]

The negative electrode active material used for the negative electrode is not particularly limited as long as it is capable of electrochemically absorbing and releasing metal ions. Specific examples thereof include (i) a carbon-based material, (ii) materials comprising a metal element and/or a metalloid element capable of being alloyed with Li, (iii) a lithium-containing metal composite oxide material, and a mixture thereof. Among these, it is preferable to use (i) a carbon-based material, (ii) materials comprising a metal element and/or a metalloid element capable of being alloyed with Li, and (iv) a mixture of graphite and materials comprising a metal element and/or a metalloid element capable of being alloyed with Li, from the viewpoint of good cycle properties and safety and excellent continuous charging properties.
These may be used alone or in combination of two or more thereof in an arbitrary ratio.

[2-2-1-1. Carbon-Based Material]

Examples of the (i) carbon-based material include natural graphite, artificial graphite, amorphous carbon, carbon-coated graphite, graphite-coated graphite, and resin-coated graphite. Among these, natural graphite is preferable. The carbon-based material may be used alone or in combination of two or more thereof in an arbitrary ratio.
Examples of the natural graphite include scaly graphite, flaky graphite, and/or graphite particles obtained by subjecting these graphite to a treatment, such as spheroidization or densification. Among these, spherical or ellipsoidal graphite particles that have been subjected to a spheroidizing treatment are preferable from the viewpoint of particle packing properties or charging and discharging rate properties.

The average particle diameter (d50) of the graphite particles is usually 1 to 100 μm.

[2-2-1-2. Physical Properties of Carbon-Based Material]

The carbon-based material as the anode active material preferably satisfies at least one item, and more preferably satisfies a plurality of items at the same time, among characteristics, such as physical properties and shapes shown in the following (1) to (4).

(1) X-Ray Diffraction Parameter

The d value (interlayer spacing) of the lattice plane (002 plane) of a carbon-based material as determined by X-ray diffraction according to Gakushin-method is usually 0.335 to 0.360 nm. The crystallite size (Lc) of the carbon-based material as determined by X-ray diffraction according to Gakushin-method is 1.0 nm or more.

(2) Volume-Based Average Particle Diameter

The volume-based average particle diameter of the carbon-based material is an average particle diameter (median diameter) on a volume basis obtained by a laser diffraction/scattering method, and is usually 1 to 100 μm.

(3) Raman R Value, Raman Full Width at Half Maximum

The Raman R value of the carbon-based material is a value measured using an argon ion laser Raman spectrum method and is usually 0.01 to 1.5.
The Raman full width at half maximum near 1580 $cm^{-1}$ of the carbon-based material is not particularly limited and is usually 10 to 100 $cm^{-1}$.

(4) BET Specific Surface Area

The BET specific surface area of the carbon-based material is a value of a specific surface area measured using a BET method and is usually 0.1 to 100 $m^2 \cdot g^{-1}$.
The negative electrode active material may comprise two or more kinds of carbon-based materials having different properties. The term "properties" as used herein refers to one or more characteristics selected from the group consisting of an X-ray diffraction parameter, a volume-based average particle diameter, a Raman R value, a Raman full width at half maximum, and a BET specific surface area.
Examples of comprising two or more kinds of carbon-based materials having different properties include a case where the volume-based particle size distribution is not symmetrical about the median diameter, a case where two or more kinds of carbon-based materials having different Raman R values are comprised, and a case where X-ray diffraction parameters are different.

[2-2-1-3. Material Comprising Metal Element and/or Metalloid Element Capable of Being Alloyed with Li]

As the (ii) material comprising a metal element and/or a metalloid element capable of being alloyed with Li, any conventionally known material can be used, and from the viewpoint of capacity and cycle life, for example, a metal or a metalloid selected from the group consisting of Sb, Si, Sn, Al, As, and Zn is preferable. When the material comprising a metal element and/or a metalloid element capable of being alloyed with Li comprises two or more kinds of metals, the material may be an alloy material made of an alloy of these metals.
Examples of the compound comprising a metal element and/or a metalloid element capable of being alloyed with Li include an oxide, a nitride, and a carbide of a metal and/or a metalloid. The material may comprise two or more kinds of metals capable of being alloyed with Li. Among these, a material comprising Si element is preferable, and metal Si (hereinafter also referred to as "Si") or a Si-containing inorganic compound is more preferable from the viewpoint of increasing the capacity. In the present specification, Si or a Si-containing inorganic compound is collectively referred to as "Si compound".
The content of the material comprising a metal element and/or a metalloid element capable of being alloyed with Li is preferably 0.1 to 25% by mass with respect to the total mass of the negative electrode active material.
In addition, the material comprising a metal element and/or a metalloid element capable of being alloyed with Li may be already alloyed with Li at the time of the production of the negative electrode described later, and as the material, a Si compound is preferable from the viewpoint of increasing the capacity.
Examples of the Si compound include $SiO_x$ ($0 \leq x \leq 2$).

Examples of the metal compound alloyed with Li include $Li_ySi$ ($0 < y \leq 4.4$) and $Li_{2z}SiO_{2+z}$ ($0 < z \leq 2$). As the Si compound, a Si oxide ($SiO_{x1}$, $0 < x1 \leq 2$) is preferable from the viewpoint of larger theoretical capacity as compared with graphite, and amorphous Si or nano-sized Si crystal is preferable from the viewpoint that alkali ions, such as lithium ions, can easily go in and out, and high capacity can be obtained.
When the material comprising a metal element and/or a metalloid element capable of being alloyed with Li is in the form of particles, the average particle diameter (d50) of the particles is usually 0.01 to 10 μm from the viewpoint of cycle life.

[2-2-1-4. Lithium-Containing Metal Composite Oxide Material]

The (iii) lithium-containing metal composite oxide material is not particularly limited as long as it can absorb and release lithium ions. Specifically, from the viewpoint of high current density charging and discharging properties, a lithium-containing metal composite oxide material comprising titanium is preferable, a composite oxide of lithium and titanium (hereinafter also referred to as a "lithium-titanium composite oxide") is more preferable, and a lithium-titanium composite oxide having a spinel structure is still more preferable since the output resistance is reduced.
In addition, lithium and/or titanium of the lithium-titanium composite oxide may be substituted with another metal element, for example, at least one element selected from the group consisting of Al, Ga, Cu, and Zn.
As the lithium-titanium composite oxide, $Li_{4/3}Ti_{5/3}O_4$, $Li_1Ti_2O_4$, and $Li_{4/5}Ti_{11/5}O_4$ are preferable. In addition, for example, $Li_{4/3}Ti_{4/3}Al_{1/3}O_4$ is also preferable as the lithium-titanium composite oxide in which a part of lithium and/or titanium is substituted with other elements.

[2-2-1-5. Mixture of Graphite and Material Comprising Metal Element and/or Metalloid Element Capable of being Alloyed with Li]

(iv) The mixture of graphite and the material comprising a metal element and/or a metalloid element capable of being alloyed with Li may be a mixture in which the above (ii) material comprising a metal element and/or a metalloid element capable of being alloyed with Li and the graphite are mixed in a state of particles independent from each other, or may be a composite in which the material comprising a metal element and/or a metalloid element capable of being alloyed with Li are present on the surface or inside of the graphite particles.
The content ratio of the material comprising a metal element and/or a metalloid element capable of being alloyed with Li is usually 1 to 99% by mass, with respect to the total of the graphite and the material comprising a metal element and/or a metalloid element capable of being alloyed with Li.
Identification of the negative electrode active material and measurement of the content thereof are performed by ICP emission spectroscopy after alkali fusion of the sample.

[2-2-2. Configuration and Production Method of Negative Electrode]

The negative electrode may be produced by any known method as long as the effects of the present invention are not impaired. For example, the negative electrode can be fabricated by adding a binder, a liquid medium, such as an aqueous solvent and an organic solvent, and, if necessary, a thickener, an electroconductive material, a filler, and the like to a negative electrode active material to form a slurry, applying the slurry onto a collector, drying the slurry, and then pressing the dried slurry to form a negative electrode active material layer.

[2-2-2-1. Content of Negative Electrode Active Material]

The content of the negative electrode active material in the negative electrode active material layer is usually 80 to 99.5% by mass.

[2-2-2-2. Electrode Density]

The negative electrode active material layer obtained by coating and drying a binder, a thickener, etc., is preferably compacted by a hand press, a roller press, or the like in order to increase the filling density of the negative electrode active material.
When the negative electrode active material is formed into an electrode, the structure of the electrode is not particularly limited, but the density of the negative electrode active material layer present on the collector is usually 1 to 2.2 $g/cm^3$.

[2-2-2-3. Binder]

The binder is not particularly limited as long as it is a material stable to a nonaqueous electrolytic solution and a liquid medium used in the production of an electrode.
Specific examples thereof include a rubber-like polymer, such as styrene-butadiene rubber (SBR), isoprene rubber, butadiene rubber, fluororubber, acrylonitrile-butadiene rubber (NBR), and ethylene-propylene rubber; and a fluorine-based polymer, such as polyvinylidene fluoride, polytetrafluoroethylene, fluorinated polyvinylidene fluoride, and a tetrafluoroethylene-ethylene copolymer. These may be used alone or in combination of two or more thereof in an arbitrary ratio.
The content of the binder with respect to the negative electrode active material is usually 0.1 to 20% by mass.
In particular, when the binder comprises a rubber-like polymer represented by SBR as a main component, the content of the binder with respect to the negative electrode active material is usually 0.1 to 5% by mass. In addition, when the binder comprises a fluorine-based polymer represented by polyvinylidene fluoride as a main component, the content of the binder with respect to the negative electrode active material is usually 1 to 15% by mass.

[2-2-2-4. Thickener]

The thickener is usually used for adjusting the viscosity of the slurry. The thickener is not particularly limited, and specific examples thereof include carboxymethyl cellulose and a salt thereof, methyl cellulose, hydroxymethyl cellulose, ethyl cellulose, and polyvinyl alcohol. These may be used alone or in combination of two or more thereof in an arbitrary ratio.
When a thickener is used, the content of the thickener with respect to the negative electrode active material is usually 0.001 to 5% by mass.

[2-2-2-5. Collector]

As the collector for holding the negative electrode active material, any known collector can be used. Examples of the collector for the negative electrode include a metal material, such as aluminum, copper, nickel, stainless steel, and nickel-plated steel, and copper is particularly preferable from the viewpoint of ease of processing and cost.
Examples of the shape of the collector for the negative electrode include a metal foil, a metal cylinder, a metal coil, a metal plate, a metal thin film, an expanded metal, a punched metal, and a foamed metal. Among these, a metal foil or a metal thin film is preferable. Note that the metal thin film may be appropriately formed in a mesh shape.
In the case where the collector for the negative electrode has a plate shape, a film shape, or the like, the collector may have any desired thickness, and the thickness is usually 1 $\mu$m to 1 mm.

[2-2-2-6. Thickness of Negative Electrode Plate]

The thickness of the negative electrode (negative electrode plate) is designed in accordance with the positive electrode (positive electrode plate) to be used, and is not particularly limited. The thickness of the negative electrode active material layer obtained by subtracting the thickness of the collector from the thickness of the negative electrode material is usually 15 to 300 $\mu$m.

[2-2-2-7. Surface Coating of Negative Electrode Plate]

The negative electrode plate may have a surface to which a material having a composition different from that of the negative electrode active material is adhered (surface adhered material). Examples of the surface adhered material include an oxide, such as aluminum oxide, a sulfate, such as lithium sulfate, and a carbonate, such as lithium carbonate.

[2-3. Separator]

A separator is usually interposed between the positive electrode and the negative electrode in order to prevent a short circuit. In this case, the nonaqueous electrolytic solution is usually used by being impregnated into the separator.
The material and shape of the separator are not particularly limited, and any known material and shape can be employed as long as the effects of the present invention are not impaired.

[2-4. Battery Design]

[2-4-1. Electrode Group]

The electrode group may have either a laminate structure in which the positive electrode plate and the negative electrode plate are laminated with the separator interposed therebetween, or a structure in which the positive electrode plate and the negative electrode plate are spirally wound with the separator interposed therebetween. The ratio of the volume of the electrode group to the internal volume of the battery (electrode group occupancy) is usually 40 to 90%.

[2-4-2. Collecting Structure]

When the electrode group has the above-described laminate structure, a structure formed by bundling metal core portions of the respective electrode layers and welding the bundled metal core portions to a terminal is suitably used. A structure in which a plurality of terminals are provided in an electrode to reduce resistance is also suitably used. When the electrode group has the above-described wound structure, the internal resistance can be reduced by providing a plurality of lead structures for each of the positive electrode and the negative electrode and bundling the lead structures to the terminal.

[2-4-3. Protection Element]

As the protection element, a PTC (Positive Temperature Coefficient) element whose resistance increases with heat generation due to an excessive current or the like, a temperature fuse, a thermistor, a valve (current cutoff valve) that cuts off a current flowing through a circuit due to a rapid increase in internal pressure or internal temperature of the battery at the time of abnormal heat generation, or the like can be used. As the protection element, a protection element having a condition that does not operate in normal use at a high current is preferably selected, and a design that does not lead to abnormal heat generation or thermal runaway even without the protection element is more preferable.

[2-4-4. Outer Packaging Body]

Nonaqueous electrolytic solution batteries are usually configured by housing the nonaqueous electrolytic solution of the present invention, a negative electrode, a positive electrode, separators, and the like in an outer packaging body (outer packaging case). The outer packaging body is not limited, and any known outer packaging body can be adopted as long as the effects of the present invention are not impaired.

The material of the outer packaging case is not particularly limited as long as it is stable to the nonaqueous electrolytic solution to be used, and from the viewpoint of weight reduction and cost, a metal, such as steel, aluminum, and an aluminum alloy, or a laminated film is preferably used. In particular, steel is preferable from the viewpoint of pressure resistance for operating the current interruption valve.

Examples of the outer packaging case using the above-mentioned metals include an outer packaging case having a sealed structure in which metals are welded to each other by laser welding, resistance welding, or ultrasonic welding, and an outer packaging case having a caulking structure in which the above-mentioned metals are used via a resin gasket.

[2-4-5. Shape]

The shape of the outer packaging case of the nonaqueous electrolytic solution battery is also arbitrary, and may be, for example, any of a cylinder-type shape, a prismatic shape, a laminate-type shape, a coin-type shape, and a large-sized shape.

Examples

Hereinafter, the present invention will be described in more detail with reference to Examples and Reference Examples, but the present invention is not limited to these examples as long as it does not exceed the gist of the present invention.

Compounds used in the present Examples and Comparative Examples are shown below.

Compound 1: fluorodimethyloctylsilane [compound represented by formula (F1-4)]
Compound 2: cyclohexyldifluoromethylsilane [compound represented by formula (F2-12)]
Compound 3: lithium difluorophosphate ($LiPO_2F_2$) [a specific anion-containing compound]
Compound 4: lithium fluorosulfonate ($FSO_3Li$) [a specific anion-containing compound]
Compound 5: lithium ethylsulfate ($CH_3CH_2SO_4Li$) [a specific anion-containing compound]

Compounds 1 and 2 were obtained in the following Synthesis Examples 1 and 2.

<Synthesis Example>

Various analytical methods in the following synthesis examples are as follows.

[Nuclear Magnetic Resonance (NMR) Analysis]

$^{1}H$, $^{13}C$, and $^{19}F$-NMR were measured at 400, 101, and 376 MHz, respectively, using a 400 Ultrashield (trade name) manufactured by Bruker. The sample was dissolved in deuterated chloroform ($CDCl_3$) and measured.

[Gas Chromatography (GC) Analysis]

One hundred μL of sample was dissolved in 1 mL of diethyl ether. The resulting solution was analyzed using a GC analyzer (manufactured by Shimadzu Corporation, trade name: GC-2010) under the following conditions.

- Column: DB-1 (length 30 m, inner diameter 0.32 mm, film thickness 0.25 μm, manufactured by Agilent Technologies)
- Detector: FID
- Temperature: 40°C → 280°C, temperature increased at 10°C /min.
- Purity was calculated from the peak area percentage.

Synthesis Example 1 [Synthesis of Compound 1 (Fluorodimethyloctylsilane)]

Methoxydimethyloctylsilane (5.00 g, 24.7 mmol) was added to a reactor, and a boron trifluoride ether complex (1.05 mL, 8.40 mmol) was added under ice cooling, followed by stirring at 55°C for 1 hour. After distilling off low boiling point components, fluorodimethyloctylsilane (4.06 g, 21.3 mmol) was obtained by distillation purification. The purity was estimated to be 99% by GC analysis.

The results of $^{1}H$-NMR, $^{13}C$-NMR, and $^{19}F$-NMR analysis were as follows.

$^{1}H$-NMR (400 MHz, $CDCl_3$): 1.38-1.27 (m, 12H), 0.88 (t, J = 6.9 Hz, 3H), 0.70-0.64 (m, 2H), 0.20 (d, $J_{H-F}$ = 7.5Hz, 6H)
$^{13}C$-NMR (101 MHz, $CDCl_3$): 33.1, 31.9, 29.3, 29.2, 22.7, 22.6, 16.5, 14.1, -1.4
$^{19}F$- NMR (376 MHz, $CDCl_3$): -162.2

Synthesis Example 2 [Synthesis of Compound 2 (Cyclohexyldifluoromethylsilane)]

Cyclohexyldimethoxymethylsilane (5.00 g, 26.5 mmol) was added to a reactor, a boron trifluoride ether complex (2.33 mL, 17.8 mmol) was added under ice cooling, and the mixture was stirred at room temperature for 2 hours and at 45°C for 5 hours. After distilling off low boiling point components, cyclohexyldifluoromethylsilane (2.35 g, 14.3 mmol) was obtained by distillation purification. The purity was estimated to be 99% by GC analysis.

The results of $^{1}H$-NMR, $^{13}C$-NMR, and $^{19}F$-NMR analysis were as follows.

$^{1}H$-NMR (400 MHz, $CDCl_3$): 1.80-1.71 (m, 5H), 1.35-1.24 (m, 5H), 0.96-0.90 (m, 1H), 0.29 (t, $J_{H-F}$ = 6.5 Hz, 3H)
$^{13}C$-NMR (101 MHz, $CDCl_3$): 27.1, 26.4, 25.2, 24.2, -6.2
$^{19}F$-NMR (376 MHz, $CDCl_3$): -141.7

<Examples 1 to 10, Comparative Examples 1-8>

[Preparation of Positive Electrode]

In an N-methylpyrrolidone solvent, 95 parts by mass of a lithium nickel cobalt manganese composite oxide ($Li_{1.0}Ni_{0.82}Co_{0.11}Mn_{0.07}O_2$) ((Ni/$M^1$) molar ratio is 0.82) as a positive electrode active material, 3 parts by mass of acetylene black as a conductive material, and 2 parts by mass of polyvinylidene fluoride (PVdF) as a binder were mixed with a disperser to form a slurry. The slurry was evenly applied to both sides of a 15 μm thick aluminum foil, dried, and pressed to form a positive electrode.

[Preparation of Negative Electrode]

One part by mass of an aqueous dispersion of sodium carboxymethylcellulose (concentration of sodium

carboxymethylcellulose: 1.5% by mass) as a thickener and 1.5 parts by mass of an aqueous dispersion of styrene-butadiene rubber (concentration of styrene-butadiene rubber: 50% by mass) as a binder were added to 97 parts by mass of natural graphite, and mixed with a disperser to form a slurry. The resulting slurry was applied to one side of a 10 μm thick copper foil, dried, and then pressed to form a negative electrode.

[Preparation of Nonaqueous Electrolytic Solution]

In a dry argon atmosphere, 1.2 mol/L of $LiPF_6$ that had been thoroughly dried was dissolved as an electrolyte in a mixture of ethylene carbonate (EC) and ethyl methyl carbonate (EMC) (volume ratio EC:EMC = 3:7), and 1.0% by mass (as the concentration in the nonaqueous electrolytic solution) of vinylene carbonate (VC) was further added (hereinafter, the mixture is referred to as "reference electrolytic solution 1").

Compounds were added to the reference electrolyte 1 in the amounts shown in Table 1 below to prepare nonaqueous electrolytic solutions. The "content (% by mass)" in Table 1 is the content in the case where each of the entire nonaqueous electrolytic solution is taken as 100% by mass.

[Production of Nonaqueous Electrolytic Solution Battery]

The above positive electrode, negative electrode, and polyethylene separator were stacked in the order of negative electrode, separator, and positive electrode to prepare a battery element. The battery element was inserted into a bag made of a laminate film of aluminum (thickness: 40 μm) with both sides coated with a resin layer so that the positive and negative terminals protruded, and the nonaqueous electrolytic solution prepared above was poured into the bag and the bag was vacuum sealed to produce a laminated nonaqueous electrolytic solution battery.

<Evaluation of Nonaqueous Electrolytic Solution Battery>

[Initial Conditioning]

In a thermostatic chamber at 25°C, the nonaqueous electrolytic solution battery prepared by the above method was charged at a constant current and constant voltage (hereinafter referred to as "CC-CV charging") at 0.3 C to 4.4 V. The battery was then held at 45°C for 48 hours for aging. The battery was then discharged at 0.3 C to 2.8 V to stabilize the nonaqueous electrolytic solution battery. The battery was then CC-CV charged at 0.3 C to 4.4 V, and then discharged at 0.3 C to 3.0 V to determine the "initial capacity".

The battery after the above initial conditioning was CC-CV charged to have a capacity at 0.2 C of half the initial discharge capacity. The battery was discharged at 1.0 C at 25°C, and the voltage at 5 seconds was measured. The average value of the slope of the obtained current-voltage line was taken as the "initial resistance".

The battery after initial conditioning was immersed in an ethanol bath and the volume was measured, and the gas generation amount was calculated from the change in the volume before and after the initial conditioning, which was taken as "initial gas".

[Charge Storage Test]

The nonaqueous electrolytic solution battery after the initial conditioning was CC-CV charged again at 0.2 C to 4.4 V, and then stored at high temperature at 80°C for 1 day. Thereafter, the nonaqueous electrolytic solution battery was cooled sufficiently, and then immersed in an ethanol bath to measure the volume, and the gas generation amount was calculated from the change in the volume before and after the storage test, which was taken as "80°C storage gas amount".

After the storage test, the cell was discharged at 0.2 C to 2.8 V to determine "capacity after storage". After CC-CV charging at 0.3 C to 4.4 V, the cell was discharged at 0.3 C to 3.0 V, and then CC-CV charged to have a capacity at 0.2 C of half the initial discharge capacity. The internal resistance of the battery after the storage test was determined, which was taken as "resistance after storage".

The data obtained above was used to calculate gas generation amount increase rate, internal resistance increase rate, and capacity retention rate shown below.

Gas generation amount increase rate: ("80°C storage gas amount" / "initial gas") × 100
Internal resistance increase rate: ("resistance after storage" / "initial resistance") × 100
Capacity retention rate: ("capacity after storage" / "initial capacity") × 100

Table 1 below shows the gas generation amount increase rate, internal resistance increase rate, and capacity retention rate.

| | Compound represented by general formula (1) | | Specific anion-containing compound | | n | z | $8/n^2$ | Gas generation amount increase rate | Internal resistance increase rate | Capacity retention rate |
|---|---|---|---|---|---|---|---|---|---|---|
| | Type | Content (% by mass) | Type | Content (% by mass) | | | | | | |
| Comparative Example 1 | - | - | - | - | - | - | - | 242 | 140 | 92 |
| Comparative Example 2 | Compound 1 | 1.00 | - | - | 1 | - | - | 265 | 142 | 91 |
| Example 1 | Compound 1 | 0.10 | Compound 3 | 1.00 | 1 | 0.10 | 8.0 | 168 | 129 | 91 |
| Example 2 | Compound 1 | 0.50 | Compound 3 | 1.00 | 1 | 0.50 | 8.0 | 179 | 131 | 91 |
| Example 3 | Compound 1 | 2.00 | Compound 3 | 1.00 | 1 | 2.00 | 8.0 | 189 | 132 | 92 |
| Example 4 | Compound 1 | 5.00 | Compound 3 | 1.00 | 1 | 5.00 | 8.0 | 196 | 135 | 92 |
| Comparative Example 3 | Compound 1 | 10.00 | Compound 3 | 1.00 | 1 | 10.00 | 8.0 | 228 | 134 | 92 |
| Comparative Example 4 | Compound 2 | 0.50 | - | - | 2 | - | - | 212 | 144 | 90 |
| Example 5 | Compound 2 | 0.10 | Compound 3 | 1.00 | 2 | 0.10 | 2.0 | 195 | 137 | 92 |
| Example 6 | Compound 2 | 0.25 | Compound 3 | 1.00 | 2 | 0.25 | 2.0 | 177 | 134 | 91 |
| Example 7 | Compound 2 | 0.50 | Compound 3 | 1.00 | 2 | 0.50 | 2.0 | 167 | 130 | 90 |
| Example 8 | Compound 2 | 1.00 | Compound 3 | 1.00 | 2 | 1.00 | 2.0 | 149 | 130 | 90 |
| Comparative Example 5 | Compound 2 | 2.50 | Compound 3 | 1.00 | 2 | 2.50 | 2.0 | 127 | 133 | 87 |
| Comparative Example 6 | - | - | Compound 3 | 1.00 | - | - | - | 230 | 136 | 92 |
| Comparative Example 7 | - | - | Compound 4 | 1.00 | - | - | - | 255 | 116 | 92 |
| Example 9 | Compound 2 | 0.50 | Compound 4 | 1.00 | 2 | 0.50 | 2.0 | 179 | 124 | 92 |
| Comparative Example 8 | - | - | Compound 5 | 1.00 | - | - | - | 289 | 119 | 91 |
| Example 8 | Compound 2 | 0.50 | Compound 5 | 1.00 | 2 | 0.50 | 2.0 | 158 | 100 | 91 |

From Table 1, it can be seen that Comparative Example 1, which does not comprise a compound represented by the general formula (I) and a specific anion-containing compound, and Comparative Examples 2, 4, and 6 to 8, which do not comprise either a compound represented by the general formula (I) or a specific anion-containing compound, are unable to reduce the gas generation amount during operation at high temperatures compared to the Examples. This is because a composite surface film cannot be formed from the compound represented by general formula (I) and the specific anion-containing compound.

Comparative Example 3, which comprises a compound represented by the general formula (I) and a specific anion-containing compound but does not satisfy the mathematical formula (II), is unable to reduce the gas generation amount during operation at high temperatures, and Comparative Example 5 is unable to suppress the decrease in capacity retention rate during operation at high temperatures. This is because when the ratio Z of the compound represented by the general formula (I) and the specific anion-containing compound is not within an appropriate range, the compound represented by the general formula (I) and the specific anion compound cannot react appropriately, and a suitable composite surface film cannot be formed.

When a compound represented by the general formula (I) and a specific anion-containing compound are comprised, and the ratio Z thereof satisfies the mathematical formula (II), the compound represented by the general formula (I) and the specific anion-containing compound react favorably to form a suitable composite surface film. Therefore, in Examples 1 to 10, the decrease in capacity retention rate and the increase in internal resistance during operation at high temperatures can be suppressed, and the gas generation amount can be reduced.

## Industrial Applicability

The nonaqueous electrolytic solution battery of the present invention has improved capacity and improved discharge properties under high current density. Therefore, the nonaqueous electrolytic solution battery of the present invention can be suitably used in all fields, such as electronic devices in which nonaqueous electrolytic solution batteries have been conventionally used.

Further, the nonaqueous electrolytic solution battery of the present invention can be used for various known applications. Specific examples of the applications include a laptop computer, a pen input personal computer, a mobile personal computer, an electronic book player, a cellular phone, a portable fax machine, a portable copy machine, a portable printer, a portable audio player, a small video camera, a headphone stereo, a video movie, a liquid crystal television, a handy cleaner, a portable CD player, a mini disc player, a transceiver, an electronic notebook, a calculator, a memory card, a portable tape recorder, a radio, a backup power source, a motor, an automobile, a motorcycle, a motorized bicycle, a bicycle, a lighting device, a toy, a game machine, a watch, an electric tool, a strobe, a camera, a household backup power source, a backup power source for business offices, a power source for load leveling, and a renewable energy storage power source.

## Claims

1. A nonaqueous electrolytic solution comprising an electrolyte, a nonaqueous solvent, a compound represented by general formula (I), and at least one specific anion-containing compound selected from an anion-containing compound having a P=O bond and a P-F bond, an anion-containing compound having an S=O bond and an S-F bond, and an alkyl sulfate anion-containing compound,

[Chem. 1]

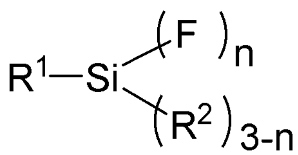

( I )

(In the formula (I), $R^1$ represents an alkyl group having 5 to 10 carbon atoms optionally substituted with a halogen atom, $R^2$ represents an alkyl group having 1 to 4 carbon atoms optionally substituted with a halogen atom, and n represents an integer of 1 to 3.)
wherein the nonaqueous electrolytic solution satisfies the following mathematical formula (II).

$$0 < Z \leq 8/n^2 \qquad (II)$$

(In the formula (II), Z represents a mass ratio (= [A]/[B]) of a content [A] of the compound represented by the general formula (I) in the nonaqueous electrolytic solution to a content [B] of the specific anion-containing compound in the nonaqueous electrolytic solution, and n represents n of the compound represented by the general formula (I).)

**2.** The nonaqueous electrolytic solution according to claim 1, wherein in the general formula (I), $R^2$ is a methyl group.

**3.** The nonaqueous electrolytic solution according to claim 1, wherein in the general formula (I), n is 1 or 2.

**4.** The nonaqueous electrolytic solution according to claim 1, wherein the specific anion-containing compound is an anion-containing compound having a P=O bond and a P-F bond.

**5.** The nonaqueous electrolytic solution according to claim 1, wherein the content of the compound represented by the general formula (I) is 0.001 to 10% by mass with respect to the total amount of the nonaqueous electrolytic solution.

**6.** The nonaqueous electrolytic solution according to claim 1, wherein the content of the specific anion-containing compound is 0.001 to 5% by mass with respect to the total amount of the nonaqueous electrolytic solution.

**7.** A nonaqueous electrolytic solution battery comprising a positive electrode and a negative electrode both of which are capable of absorbing and releasing a metal ion, and a nonaqueous electrolytic solution,
wherein the nonaqueous electrolytic solution is the nonaqueous electrolytic solution according to any one of claims 1 to 6.

**8.** The nonaqueous electrolytic solution battery according to claim 7, wherein the positive electrode comprises a positive electrode active material, and the positive electrode active material is a lithium transition metal oxide represented by the following composition formula (1).

$$Li_{1+y}M^1O_2 \qquad (1)$$

(In the composition formula (1), y is -0.2 to 0.5, $M^1$ represents a plurality of elements including at least Ni element, and a molar ratio ($Ni/M^1$) of the content of Ni element to the content of all elements comprised in $M^1$ is 0.40 to 1.0.)

**9.** The nonaqueous electrolytic solution battery according to claim 8, wherein the positive electrode active material is a lithium transition metal composite oxide represented by the following composition formula (2).

$$Li_{a1}Ni_{b1}M^2_{c1}O_2 \qquad (2)$$

(In the composition formula (2), a1, b1, and c1 are numerical values that satisfy $0.80 \leq a1 \leq 1.10$, $0.40 \leq b1 \leq 0.99$, and $0.01 \leq c1 \leq 0.60$, respectively, and $b1 + c1 = 1$. $M^2$ comprises at least one element selected from the group consisting of Co, Mn, Al, Mg, Zr, Fe, Ti, and Er.)

## INTERNATIONAL SEARCH REPORT

International application No.
**PCT/JP2024/013922**

**A. CLASSIFICATION OF SUBJECT MATTER**

***H01M 10/0567***(2010.01)i; ***H01M 4/505***(2010.01)i; ***H01M 4/525***(2010.01)i; ***H01M 10/052***(2010.01)i
FI: H01M10/0567; H01M10/052; H01M4/525; H01M4/505

According to International Patent Classification (IPC) or to both national classification and IPC

**B. FIELDS SEARCHED**

Minimum documentation searched (classification system followed by classification symbols)

H01M10/0567; H01M4/505; H01M4/525; H01M10/052

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2011-222450 A (DENSO CORPORATION) 04 November 2011 (2011-11-04)<br>claims 1-8, paragraphs [0008], [0028], [0046]-[0050], [0093], examples | 1-9 |
| Y | JP 2016-186910 A (ASAHI KASEI KABUSHIKI KAISHA) 27 October 2016 (2016-10-27)<br>claims 1, 6, paragraphs [0011], [0027], [0028], [0048]-[0051], examples | 1-9 |
| Y | CN 115588779 A (GUANGZHOU TINCI MATERIALS TECHNOLOGY CO., LTD.) 10 January 2023 (2023-01-10)<br>claims 1, 7, paragraph [0033] | 1-9 |
| Y | CN 110854433 A (SUNWODA ELECTRIC VEHICLE CELL CO., LTD.) 28 February 2020 (2020-02-28)<br>claims 1, 10 | 1-9 |
| A | JP 2012-3994 A (SONY CORPORATION) 05 January 2012 (2012-01-05)<br>entire text | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 June 2024** | **02 July 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
PCT/JP2024/013922

C. DOCUMENTS CONSIDERED TO BE RELEVANT

| Category* | Citation of document, with indication, where appropriate, of the relevant passages | Relevant to claim No. |
|---|---|---|
| A | JP 2004-171981 A (MITSUI CHEMICALS, INC.) 17 June 2004 (2004-06-17) entire text | 1-9 |

Form PCT/ISA/210 (second sheet) (July 2022)

**INTERNATIONAL SEARCH REPORT**
**Information on patent family members**

International application No.
**PCT/JP2024/013922**

| Patent document cited in search report | Publication date (day/month/year) | Patent family member(s) | Publication date (day/month/year) |
|---|---|---|---|
| JP 2011-222450 A | 04 November 2011 | (Family: none) | |
| JP 2016-186910 A | 27 October 2016 | (Family: none) | |
| CN 115588779 A | 10 January 2023 | (Family: none) | |
| CN 110854433 A | 28 February 2020 | WO 2021/093265 A1 | |
| JP 2012-3994 A | 05 January 2012 | US 2011/0311860 A1<br>CN 102290601 A | |
| JP 2004-171981 A | 17 June 2004 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011222450 A
- US 20190305372 A
- WO 2015111676 A


### Non-patent literature cited in the description


- *Journal of Power Sources*, 2006, vol. 156, 555-559
- *Journal of The Electrochemical Society*, 2005, vol. 152 (12), A2327-A2334